(19) Europäisches Patentamt
European Patent Office
Office européen des brevets

(11) **EP 4 742 150 A1**

(12) **EUROPEAN PATENT APPLICATION**
published in accordance with Art. 153(4) EPC

(43) Date of publication:
**13.05.2026 Bulletin 2026/20**

(21) Application number: **24887620.3**

(22) Date of filing: **11.09.2024**

(51) International Patent Classification (IPC):
***G06T 7/00*** (2017.01)

(86) International application number:
**PCT/CN2024/118110**

(87) International publication number:
**WO 2025/098001 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.11.2023 CN 202311498351**

(71) Applicant: **Tencent Technology (Shenzhen)
Company Limited
Shenzhen, Guangdong 518057 (CN)**

(72) Inventor: **ZHAN, Jiawei
Shenzhen, Guangdong 518057 (CN)**

(74) Representative: **EP&C
P.O. Box 3241
2280 GE Rijswijk (NL)**

(54) **DEFECT DETECTION METHOD AND APPARATUS, ELECTRONIC DEVICE, STORAGE MEDIUM AND PROGRAM PRODUCT**

(57)    Disclosed in the embodiments of the present application are a defect detection method and apparatus, an electronic device, a storage medium and a program product. The method comprises: acquiring an image under test of a target workpiece and a template image of the target workpiece, and comparing the image under test with the template image so as to obtain a differential image; inputting the image under test and the differential image into a defect detection model, and executing the following processing: on the basis of the image under test and the differential image, extracting a target image feature and, on the basis of the target image feature, performing defect detection on the image under test to obtain defect detection box information of the image under test; positioning a defect area in the differential image and, according to the defect area, determining a first detection result of the target workpiece; and, according to the defect detection box information and the first detection result, determining a second detection result of the target workpiece.

FIG. 2

EP 4 742 150 A1

**Description**

RELATED APPLICATION

This disclosure claims priority to Chinese Patent Application No. 202311498351.5, entitled "DEFECT DETECTION METHOD AND APPARATUS, ELECTRONIC DEVICE, AND STORAGE MEDIUM" filed with the China National Intellectual Property Administration on November 10, 2023.

FIELD OF THE TECHNOLOGY

This disclosure relates to the field of artificial intelligence technologies, and in particular, to a defect detection method and apparatus, an electronic device, a storage medium, and a program product.

BACKGROUND OF THE DISCLOSURE

In some applications, product defect detection is usually implemented by using a deep learning algorithm. However, accuracy of defect detection performed by using the deep learning algorithm relies on a large quantity of manually labeled defect samples. A larger quantity of defect types or lower distinguishability of defect features indicates that a larger quantity of defect samples may be needed, leading to high costs of obtaining samples and low training efficiency. In addition, because supervised training is usually used in the deep learning algorithm, accuracy of defect detection may be reduced when training samples are insufficient.

SUMMARY

Embodiments of this disclosure provide a defect detection method and apparatus, an electronic device, a storage medium, and a program product, to improve accuracy of defect detection and reduce dependency on a training sample.
According to an aspect, an embodiment of this disclosure provides a defect detection method, including:

obtaining an image of a workpiece and a template image of the workpiece, and comparing the image with the template image to obtain a differential image;
inputting the image and the differential image to a pre-trained defect detection model, to perform the following processing:

extracting a target image feature from the image and the differential image; and

performing defect detection on the image based on the target image feature to obtain information of a bounding box for annotating a first defect region in the image;

locating a second defect region in the differential image, and determining a first detection result of the workpiece based on whether the second defect region meets a pre-defined defect feature condition; and

determining a second detection result of the workpiece based on the information of the bounding box and the first detection result.

According to another aspect, an embodiment of this disclosure further provides a defect detection apparatus, including:

a first processing module, configured to obtain an image of a workpiece and a template image of the workpiece, and compare the image with the template image to obtain a differential image;

a second processing module, configured to input the image and the differential image to a defect detection model, to perform the following processing: extracting a target image feature from the image and the differential image; and perform defect detection on the image based on the target image feature to obtain information of a bounding box for annotating a first defect region in the image;

a third processing module, configured to locate a second defect region in the differential image, and determine a first detection result of the workpiece based on whether the second defect region meets a pre-defined defect feature condition; and

a fourth processing module, configured to determine a second detection result of the workpiece based on the information of a bounding box and the first detection result.

According to another aspect, an embodiment of this disclosure further provides an electronic device, including a memory and a processor, the memory having a computer program stored therein, and the processor, when executing the computer program, implementing the foregoing defect detection method.

According to another aspect, an embodiment of this disclosure further provides a computer-readable storage medium, the storage medium having a computer program stored therein, and the computer program, when executed by a processor, implementing the foregoing defect detection method.

According to another aspect, an embodiment of this disclosure further provides a computer program product, the computer program product including a computer program, and the computer program being stored in a computer-readable storage medium. A processor of a computer device reads the computer program from the computer-readable storage medium, and the processor executes the computer program, to enable the computer device to perform the foregoing defect detection method.

BRIEF DESCRIPTION OF THE DRAWINGS

The accompanying drawings are intended to provide a further understanding of the technical solutions of this disclosure, constitute a part of the specification, and are used to explain the technical solutions of this disclosure together with the embodiments of this disclosure, but do not constitute a limitation on the technical solutions of this disclosure.

FIG. 1 is a schematic diagram of an exemplary implementation environment according to an embodiment of this disclosure.

FIG. 2 is an exemplary schematic flowchart of a defect detection method according to an embodiment of this disclosure.

FIG. 3 is a schematic diagram of comparison between an image and a template image according to an embodiment of this disclosure.

FIG. 4 is a schematic diagram of generating information of a bounding box of an image according to an embodiment of this disclosure.

FIG. 5 is a schematic diagram of preprocessing before feature extraction is performed on an image and a differential image according to an embodiment of this disclosure.

FIG. 6 is a schematic diagram of a process of extracting a first image feature according to an embodiment of this disclosure.

FIG. 7 is a schematic diagram of generating a data stream of a convolutional branch in a process of extracting a first image feature according to an embodiment of this disclosure.

FIG. 8 is a schematic diagram of a process of extracting a first image feature according to another embodiment of this disclosure.

FIG. 9 is a schematic diagram of a process of extracting a first image feature according to another embodiment of this disclosure.

FIG. 10 is a schematic diagram of extracting a second convolutional feature according to an embodiment of this disclosure.

FIG. 11 is a schematic diagram of a process of generating a target image feature according to an embodiment of this disclosure.

FIG. 12 is a schematic diagram of a defect detection process according to an embodiment of this disclosure.

FIG. 13 is a schematic diagram of a process of determining a second detection result according to an embodiment of this disclosure.

FIG. 14 is a schematic diagram of effect of morphological filtering according to an embodiment of this disclosure.

FIG. 15 is a schematic diagram of a process of determining a correlation coefficient according to an embodiment of this disclosure.

FIG. 16 is a schematic diagram of a similarity transformation correspondence between a template image and an image according to an embodiment of this disclosure.

FIG. 17 is a schematic diagram of a training process for a defect detection model according to an embodiment of this disclosure.

FIG. 18 is a schematic diagram of a defect detection process according to another embodiment of this disclosure.

FIG. 19 is a schematic diagram of a process of generating information of a bounding box according to another embodiment of this disclosure.

FIG. 20 is an exemplary schematic diagram of an overall process of a defect detection method according to an embodiment of this disclosure.

FIG. 21 is an exemplary schematic diagram of an overall process of a defect detection method according to an embodiment of this disclosure.

FIG. 22 is an exemplary schematic structural diagram of a defect detection apparatus according to an embodiment of this disclosure.

FIG. 23 is a block diagram of a partial structure of a terminal according to an embodiment of this disclosure.

FIG. 24 is a block diagram of a partial structure of a server according to embodiment of this disclosure.

DESCRIPTION OF EMBODIMENTS

To make the objectives, technical solutions, and advantages of this disclosure clearer, the following further describes this disclosure in detail with reference to the accompanying drawings and the embodiments. The specific embodiments described herein are merely intended to explain this disclosure but not to limit this disclosure.

In specific implementations of this disclosure, when related processing needs to be performed based on data related to characteristics of a target object, such as attribute information or an attribute information set of the target object, permission or consent of the target object is first obtained, and collection, use, processing, and the like of the data all comply with related laws, regulations, and standards. The target object may be a user. In addition, when the attribute information of the target object needs to be obtained in the embodiments of this disclosure, individual permission or individual consent of the target object is obtained by popping up a window, jumping to a confirmation page, or the like. After the individual permission or the individual consent of the target object is explicitly obtained, related data of the target object that is necessary for enabling the embodiments of this disclosure to operate normally is obtained.

For ease of understanding of the technical solutions provided in the embodiments of this disclosure, some key terms used in the embodiments of this disclosure are explained below first.

Defect detection is usually detection on a surface defect of an object. During surface defect detection, a machine vision detection technology is used to detect defects, such as a spot, a pit, a scratch, a color difference, and damage, on a surface of a workpiece, and a part with a defect may be identified.

Red-green-blue (RGB) is a color model including three primary colors: red, green, and blue. Various colors are obtained through changes in channels of the three colors, that is, red, green, and blue, and superposition thereof. In the fields of electronic displays, photography, computer graphics, and the like, the RGB is widely used to describe, control, and display a color image, and is used as a save format and a display format of a photo obtained through imaging by a camera.

Morphological image processing is a series of image processing technologies for processing an image shape feature. A basic idea of morphology is to measure or extract a corresponding shape or feature in an input image by using a special structural element, to further perform image analysis and object recognition.

Currently, product defect detection is usually implemented by using a deep learning algorithm. For example, in an industrial manufacturing scenario, technologies such as artificial intelligence and deep learning are usually used for quality inspection on an appearance of a product. When the deep learning algorithm is used for defect detection, a deep learning network model trained in a supervised manner is usually used to label a defect in an image of a workpiece under quality inspection, an abnormal region is recognized by using an object detection method or an object segmentation method, and then defects are classified, to achieve corresponding defect detection effect.

However, because the defect in the image of the workpiece under quality inspection needs to be manually labeled, sample manufacturing costs are high. In addition, a larger quantity of defect samples are needed with an increasing quantity of defect types or lower distinguishability of a defect feature. Moreover, it is difficult to obtain some samples with severe visual defects. Consequently, the deep learning algorithm has not learned features of similar defects, and cannot accurately distinguish a defect condition of the workpiece under quality inspection. Therefore, accuracy of defect detection performed by using the deep learning algorithm relies on a large quantity of manually labeled defect samples. However, difficulty and costs of obtaining samples are high. Consequently, accuracy of defect detection is reduced when samples are insufficient.

To resolve the foregoing problems, the embodiments of this disclosure provide a defect detection method and apparatus, an electronic device, a storage medium, and a program product, to improve accuracy of defect detection and reduce dependency on a training sample.

The method provided in the embodiments of this disclosure may be applied to different technical fields, including but not limited to the following scenarios: artificial intelligence, cloud technologies, computer vision technologies, industrial automation, and the like.

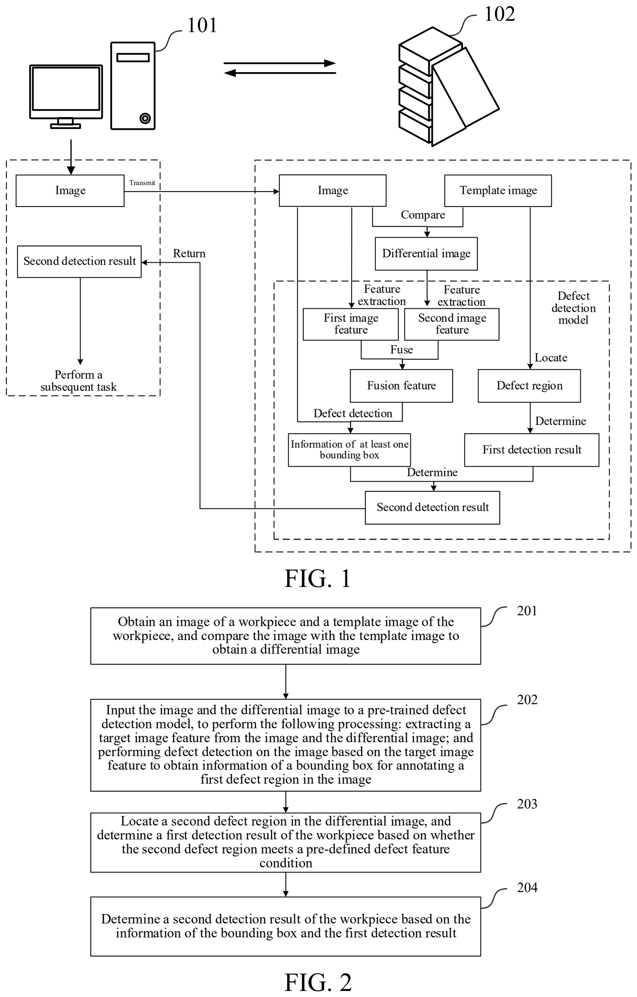

FIG. 1 is a schematic diagram of an exemplary implementation environment according to an embodiment of this disclosure. The implementation environment includes a terminal 101 and a server 102. The terminal 101 is connected to the server 102 through a communication network.

The terminal 101 may be a smartphone, a tablet computer, a notebook computer, a desktop computer, a smart speaker, a smartwatch, an in-vehicle terminal, or the like, but is not limited thereto. The terminal 101 and the server 102 may be directly or indirectly connected through wired or wireless communication. This is not limited in this embodiment of this disclosure. In some embodiments, the terminal 101 may obtain an image of a workpiece, and then transmit the image to the server 102.

The server 102 may be an independent physical server, or may be a server cluster or a distributed system that includes a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

In addition, the server 102 may alternatively be a node server in a blockchain network. In some embodiments, a defect detection model may be prestored on the server 102. The server 102 may further pre-store a template image of the workpiece, or the server 102 may receive a template image of the workpiece that is transmitted by the terminal 101.

When obtaining the image of the workpiece and the template image of the workpiece, the server 102 may compare the image with the template image to obtain a differential image, and then separately input the image and the differential image to the prestored defect detection model to obtain information of at least one bounding box in the image; and may further locate a defect region in the differential image, determine a first detection result (namely, a reference detection result) of the workpiece based on the defect region, and then determine a second detection result (namely, an object detection result) of the workpiece based on the information of at least one bounding box and reference detection result.

In this way, differential comparison is combined with a deep learning algorithm, so that a feature with high visibility can be obtained through differential comparison, to visually assist in defect detection, effectively improve accuracy of defect detection, and reduce dependency on a training sample.

For example, the terminal 101 may obtain an image of a workpiece and a template image of the workpiece, and then transmit the image and the template image to the server 102. After receiving the image and the template image of the workpiece, the server 102 may compare the image with the template image to obtain a differential image, where the differential image can provide visual difference information of the workpiece. Then the server 102 separately inputs the image and the differential image to a defect detection model to extract a target image feature. Difference information is introduced into the defect detection model, to improve prediction accuracy of the model and improve reliability of the target image feature.

Then the server 102 performs defect detection on the image based on the target image feature, to obtain information of at least one bounding box in the image. A feature related to a defect region in the image is highlighted by using the differential image, to improve a capability of detecting, by the defect detection model, a defect category that has not been learned due to lack of a training sample, and improve accuracy of the information of at least one bounding box.

Then the server 102 locates a defect region in the differential image, determines a first detection result of the workpiece based on the defect region, and determines a second detection result of the workpiece based on the first detection result and the information of at least one bounding box. In this way, high visibility of a feature obtained through comparison can visually assist in defect detection, to effectively improve accuracy of defect detection and reduce dependency on a training sample.

FIG. 2 is an exemplary schematic flowchart of a defect detection method according to an embodiment of this disclosure. The defect detection method may be performed by a terminal, a server, or a terminal and a server in cooperation. In this embodiment of this disclosure, an example in which the method is performed by a server is used for description. The defect detection method includes but is not limited to the following operation 201 to operation 204.

Operation 201: Obtain an image of a workpiece and a template image of the workpiece, and compare the image with the template image to obtain a differential image.

In a possible implementation, the image of the workpiece may be captured by a camera or a sensor, and the image may be a surface image, a cross-sectional image, an image obtained through infrared imaging, or the like, of the workpiece. This specifically depends on an object of defect detection and a detection requirement.

The template image of the workpiece may be a reference image, to be specific, may be an image including a known normal or non-defective workpiece, and is configured for comparison with the image, to detect a difference or a defect on the workpiece. The template image may be pre-obtained in a design or manufacturing process of a workpiece of the same category as that of the workpiece.

Specifically, for surface defect detection, a camera may be used to obtain a surface image of the workpiece, and the image may be an image from a front view, a side view, or another angle of the workpiece, to comprehensively capture features of a surface of the workpiece.

For internal defect detection or cross-sectional detection, a sensor (for example, an X-ray sensor or an infrared sensor) may be used to obtain an internal structural image or a cross-sectional image of the workpiece as the image.

Defect detection may be applied to a plurality of scenarios, for example, steel plate defect detection, floor blemish detection, printed circuit board (PCB) defect detection, thin film defect detection, lamp bead defect detection, metal bar end-face detection, and cloth wrinkle level evaluation. The workpiece is correspondingly a steel plate, a floor, a PCB, thin film, a lamp bead, a metal bar, cloth, or the like.

In a possible implementation, during defect detection, the image may be compared with the template image, to find a difference and a change between the two images, and generate a differential image, so that a possible defect or abnormal condition on the workpiece can be visually determined.

Color modes of the image and the template image of the workpiece may be the same or different. Specifically, both the image and the template image of the workpiece may be RGB color images. In this case, before the image is compared with the template image, grayscale conversion needs to be performed on the two images. Alternatively, the image of the workpiece may be an RGB color image, and the template image may be a prestored grayscale binary image. In this case, before the image is compared with the template image, grayscale conversion needs to be performed only on the image.

Specifically, grayscale transformation may be separately performed on the image and the template image of the workpiece, including: calculating a grayscale difference between a current pixel and an adjacent pixel in the image to obtain a pixel difference value; then comparing the pixel difference value with a pre-set grayscale difference threshold to obtain a binary pixel value of the current pixel; and then traversing pixels in the image to obtain binary pixel values of all pixels. The adjacent pixel may be a pixel around each pixel in the image, or may be all pixels in the image, or may be pixels, in images of different scales, that correspond to a position of the current pixel.

The image and the template image are converted into images of a binary image type. To be specific, the image and the template image are converted into grayscale images. A grayscale level of an image indicates a luminance value of each pixel in the image, and a higher grayscale level indicates higher luminance of the pixel. After the grayscale images corresponding to the image and the template image are obtained, comparison may be performed between the grayscale images. First, image matching is performed on the two images, and morphological processing, such as rotation, translation, and stretching, is performed on the template image to align a workpiece object displayed in the template image with a workpiece object displayed in the image. Then image comparison is performed on the image and an adjusted template image. To be specific, subtraction is performed between corresponding pixel values of the image and the adjusted template image, to reduce similar parts between the two images and highlight a changed part between the two images.

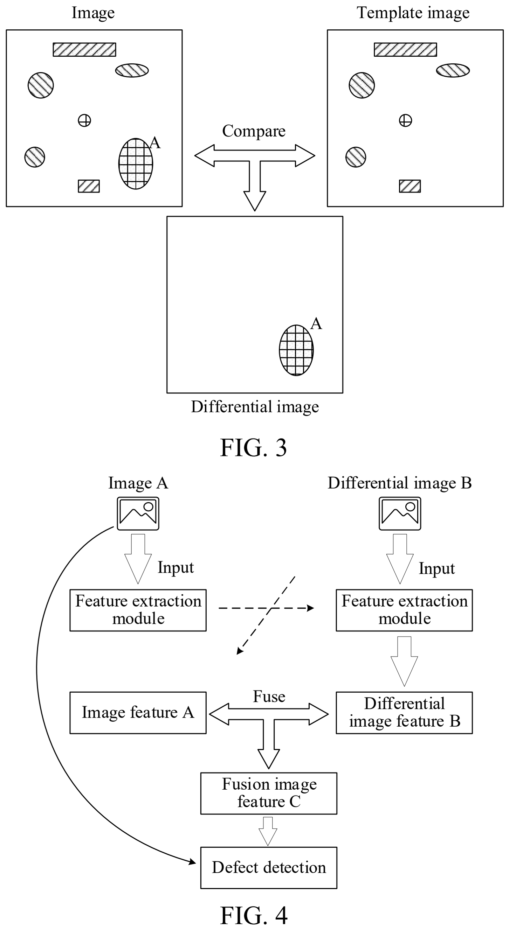

FIG. 3 is a schematic diagram of comparison between an image and a template image according to an embodiment of this disclosure. An absolute value obtained through subtraction between a pixel value of each pixel in the image and a pixel value of a corresponding pixel in the adjusted template image is used as a pixel value of each pixel in the differential image. A calculation formula is specifically as follows:

$$Df(x, y) = abs[I(x, y) - T(x, y)] \qquad (1)$$

$Df(x, y)$ indicates a pixel value of a pixel with coordinates $(x, y)$ in the differential image, $I(x, y)$ indicates a pixel value of a pixel with coordinates $(x, y)$ in the image, and $T(x, y)$ indicates a pixel value of a pixel with coordinates $(x, y)$ in the adjusted template image.

As shown in FIG. 3, a differential region A is displayed in the differential image, indicating that a difference occurs between the image and the adjusted template image. It can be found through comparison between the adjusted template image and the image that a structural region corresponding to the differential region A is displayed in the adjusted template image, and no structural region corresponding to the differential region A is displayed in the image. To be specific, a reference workpiece of the same category as that of the workpiece has a first structure at a corresponding position in the differential region A, and the workpiece does not have the first structure at the corresponding position in the differential region A.

In a possible implementation, the template image may be prestored on a server or a terminal. After the image of the workpiece is obtained, object detection is performed on the workpiece in the image to determine a workpiece category corresponding to the workpiece, and then a template image of the same workpiece category is obtained based on the corresponding workpiece category as the template image of the workpiece.

Operation 202: Input the image and the differential image to a pre-trained defect detection model, to perform the following processing: extracting a target image feature from the image and the differential image; and performing defect detection on the image based on the target image feature to obtain information of a bounding box for annotating a first defect region in the image.

In a possible implementation, the defect detection model may be a neural network model that is constructed based on a deep learning algorithm and that is configured to automatically detecting and recognizing a defect of a workpiece. The defect detection model can learn and extract a feature from an input sample image, and predict and classify a defect based on the extracted feature.

The defect detection model is trained through supervised training. To be specific, a large quantity of labeled datasets are needed for training, performance and accuracy of the defect detection model depend on quality and a quantity of training data, and it is difficult for the defect detection model to detect a defect category that has not been learned. Therefore, in addition to inputting the image to the defect detection model for defect detection, the differential image is further inputted to the defect detection model, and the defect detection model can extract the target image feature based on both the image and the differential image.

The differential image is obtained through comparison between the image and the template image, and includes difference information between the two images. Therefore, the differential image is introduced to provide image difference information for the defect detection model, to assist the defect detection model in extracting a feature of the image. In this way, a feature of a corresponding region in the image can be more accurately extracted based on the image difference information, to help improve accuracy of subsequent defect detection.

In a possible implementation, a bounding box may be a rectangular box for locating and annotating a defect region in the image, and the information of a bounding box may be position coordinates of the bounding box in the image, and may further include a confidence level outputted by the defect detection model for the bounding box.

The image may not clearly indicate a defect, but the differential image has high visibility and can highlight a feature with a visually clear defect in the image, so that the obtained target image feature can help improve sensitivity of the defect detection model to a visually clear defect. In addition, the defect detection model is obtained through supervised training, and the target image feature can supplement the difference information between the image and the template image, so that the defect detection model has a good capability of detecting a defect that has not been learned, to improve a generalization capability of the defect detection model.

Therefore, defect detection is performed on the image based on the target image feature, so that the defect detection model can recognize a defect that has a quite small size, is visually unclear, or is similar to a background, to improve detection precision. This can help reduce a false detection rate for a normal workpiece and a missing detection rate for a workpiece with a defect, and can also help the defect detection model recognize a defect feature that has not been learned in the image, to improve accuracy of generating a bounding box, in other words, improve reliability of the information of a bounding box.

In a possible implementation, in a process of inputting the image and the differential image to the defect detection model to extract the target image feature, a first image feature may be first extracted from the image, a second image feature is extracted from the differential image, and the first image feature and the second image feature are fused to obtain the target image feature.

In a possible implementation, feature fusion may include weighted fusion, feature concatenation, feature superposition, feature selection, and the like.

Specifically, a first weight may be allocated to the first image feature, a second weight is allocated to the second image feature, and then weighted summation is performed on the first image feature and the second image feature to obtain the target image feature. Selection of the first weight and the second weight may be determined based on importance of a features, or may be obtained through model training.

Specifically, the first image feature and the second image feature may alternatively be concatenated in a pre-set order to form a larger vector, so that information of the two features can be conveniently integrated to extend dimensionality of a feature vector. In this way, the defect detection model can use both a feature of the image and a feature of the differential image, to improve performance of the defect detection model.

Specifically, the first image feature and the second image feature may alternatively be superposed through addition and subtraction, a multiplication operation, a convolution operation, a pooling operation, or the like, to obtain the target image feature.

Region selection may alternatively be performed on the first image feature and the second image feature, to separately select some key feature information from the first image feature and some key feature information from the second image feature for re-combination, to form the target image feature.

The first image feature of the image captures original information of the workpiece, and the second image feature of the differential image captures difference information between the workpiece and the reference workpiece (a workpiece displayed in the template image of the workpiece), that is, possible defect information of the workpiece. The first image feature and the second image feature are fused to more comprehensively and accurately indicate information of the workpiece. This helps improve accuracy of recognizing a defect in a subsequent defect detection operation.

FIG. 4 is a schematic diagram of generating information of a bounding box of an image according to an embodiment of this disclosure. First, the image (an image A) and the differential image (a differential image B) of the workpiece are obtained. Then feature extraction is separately performed on the image A and the differential image B by using a feature extraction module in the defect detection model, to obtain an image feature A (namely, the first image feature) of the image A and a differential image feature B (namely, the second image feature) of the differential image B. Then feature fusion is performed on the image feature A and the image feature B to obtain a target image feature C. Then defect detection may be performed on the image A based on the target image feature C, to obtain information of a bounding box of the image A.

The differential image feature B (namely, the second image feature of the differential image) is introduced, so that the defect detection model can better focus on a difference between the workpiece and the reference workpiece. In this way, a defect that may be originally hidden in background noise or a surface texture is more likely to be detected, to improve sensitivity of the defect detection model to a defect, and further improve accuracy of the information of a bounding box.

In addition, feature extraction modules for extracting features of the image A and the differential image B may be different, and the two feature extraction modules may be separately obtained through training by using corresponding training samples. For example, if the image A is a color image, a feature extraction module for extracting a feature of the image (the image A) may use a color image as a training sample for feature extraction training; and if the differential image B is a grayscale image, a feature extraction module for extracting a feature of the differential image B may use a grayscale image as a training sample for feature extraction training, so that more accurate image features can be extracted for different image data.

In addition, parameters of feature extraction modules for extracting features of the image A and the differential image B may be the same, that is, the two images share a same feature extraction module, so that the feature extraction module of the defect detection model can learn two different types of information at the same time, and more accurately capture difference information between the two images.

Operation 203: Locate a second defect region in the differential image, and determine a first detection result of the workpiece based on whether the second defect region meets a pre-defined defect feature condition. In some examples, Operation 203 is based on one or more of Boolean image processing, morphological image processing, and statistic processing of the differential image.

In a possible implementation, a pixel value of each pixel in the differential image may be compared with a pre-set pixel threshold, and when the pixel value of the pixel exceeds the pre-set pixel threshold, it can be considered that a defect occurs at a position corresponding to the pixel. The defect region in the differential image may be located through statistics collection on pixels with pixel values exceeding the pre-set pixel threshold.

In a possible implementation, the differential image may be a grayscale image. A connected-region analysis may be performed on the differential image, and adjacent pixels with a same pixel value are grouped into one connected region. The adjacent pixels may be foreground pixels. To be specific, adjacent pixels whose pixel values are 1 are grouped into one connected region. Then position information and size information of the defect region are determined by calculating a bounding rectangle, a minimum circumscribed circle, or the like of the connected region. For example, the bounding rectangle of the connected region may be calculated, and the bounding rectangle is used as the defect region.

In a possible implementation, a shape feature (for example, an aspect ratio or circularity) of the connected region may be further calculated to check whether the defect region conforms to a defect feature, to select a defect region conforming to the defect feature, and determine the first detection result.

In addition, before connected-region analysis is performed on the differential image, morphological processing (for example, an opening operation or a closing operation) may be first performed on the differential image to reduce impact of noise, and a connected region is filtered based on a pre-set connected-region threshold (for example, an area of the connected region or a perimeter of the connected region), to exclude a connected region with few pixels, and improve accuracy of analysis.

In a possible implementation, after the defect region is determined, whether the defect region meets a pre-defined defect feature condition may be determined, to determine the first detection result of the workpiece. To be specific, the first detection result is configured for indicating to determine, based on the differential image, whether the workpiece has a defect.

Specifically, the defect feature condition may be: whether an area, a perimeter, or a shape of the defect region or a difference between a pixel value of a pixel in the connected region and a pixel value of a pixel outside the connected region exceeds a pre-set defect threshold. If the defect region meets one or more defect feature conditions, it can be considered that the workpiece has a defect, that is, the first detection result is that quality inspection fails. If the defect region does not meet the defect feature condition, it can be considered that the workpiece has no defect, that is, the first detection result is that quality inspection succeeds.

Operation 204: Determine a second detection result of the workpiece based on the information of the bounding box and the first detection result.

In a possible implementation, the information of a bounding box includes a region, in the image, that possibly has a defect and that is predicted by the defect detection model based on a feature learned during training. The first detection result is configured for indicating a defect status of the workpiece that is obtained by comparing the template image with the image, and has high visibility. This can avoid missing a defect that has not occurred during training but is visually clear. In addition, a recall rate for a known defect is high, so that detection accuracy can be effectively improved.

In addition, a computer vision technology is prone to interference from a lighting condition, a surface texture of a workpiece, and other factors, and it may be difficult to identify some defects in a single viewing angle or dimension. However, a combination of a plurality of information sources can reduce impact of the interference factors, to improve detection stability and reliability, so that a defect can be more comprehensively and accurately detected. Therefore, the second detection result may be determined based on both the information of a bounding box and the first detection result, to effectively reduce false detection and missing detection, and further improve accuracy of object defect detection and reduce dependency on a training sample.

In a possible implementation, whether the quality inspection of the workpiece succeeds may be determined by comparing the information of a bounding box with a pre-set defect region condition. For example, the pre-set defect condition may be that an area of a bounding box indicated by the information of a bounding box is greater than a pre-set defect area, or that a bounding box indicated by the information of a bounding box includes a region in which no defect is allowed (for example, a structural region severely affecting workpiece quality). Therefore, when the information of a bounding box or the first detection result indicates that the quality inspection of the workpiece fails, it can be determined that a defect of the workpiece fails the quality inspection, that is, the second detection result is that the quality inspection fails. When both the information of a bounding box and the first detection result indicate that the quality inspection of the workpiece succeeds, it can be determined that the workpiece has no defect or a defect can succeed in the quality inspection, that is, the second detection result is that the quality inspection succeeds.

In a possible implementation, the image is a multi-channel image, the differential image is a single-channel image, a process of inputting the image and the differential image to a pre-trained defect detection model may include: obtaining an expanded differential image by replicating data of the differential image, a quantity of channels of the expanded differential image being equal to a quantity of channels of the image; and inputting the image and the expanded differential image to the defect detection model. The image and expanded the differential image shares a same feature extraction module in the defect detection model. For example, an expanded differential image is obtained based on replicating the single-channel data of the differential image, where a quantity of channels of the expanded differential image is equal to a quantity of channels of the image, and a quantity of channels of the differential image is less than the quantity of channels of the image. In addition, the image and the expanded differential image are separately input to the defect detection model.

The image and the differential image both include key information that helps recognize a defect. To enable the defect detection model to obtain more information for more accurate prediction, the image and the differential image may be inputted to a same feature extraction module for feature extraction. However, the feature extraction module requires that all inputs have same dimensionality.

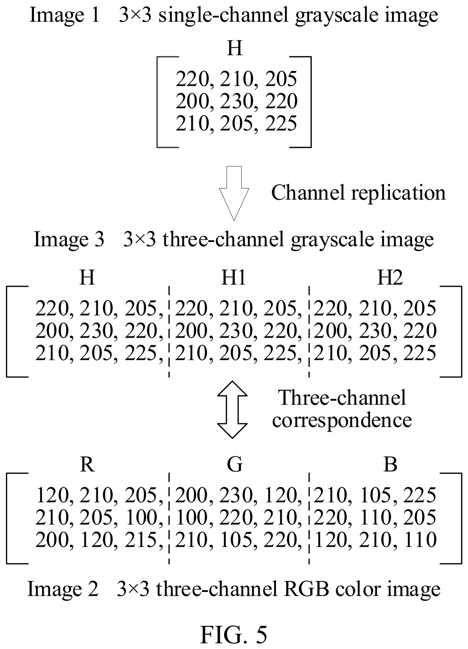

FIG. 5 is a schematic diagram of preprocessing before feature extraction is performed on an image and a differential image according to an embodiment of this disclosure. In this case, for example, the differential image (an image 1) is a 3×3 grayscale image, the image 1 is a single-channel image and is represented by a matrix H. Each element in the matrix H corresponds to one pixel in the image, and each element is represented as luminance. A value range of each element may be 0 to 255.

The image is a color image and has multi-channel three-dimensional data. For example, the image (an image 2) is a three-channel 3×3 RGB color image. In the matrix, data of a channel R represents a component of a red channel, data of a channel G represents a component of a green channel, and data of a channel B represents a component of a blue channel.

Therefore, a quantity of channels of the differential image may be made to be equal to a quantity of channels of the image through replication. As shown in FIG. 5, the differential image (the image 1) is replicated into an image (an image 3) with three-channel data, where data of a channel H1, data of a channel H2, and data of a channel H are the same.

The differential image and the image share a same feature extraction module in the defect detection model, so that the defect detection model can process and learn, in same parameter space, information represented in two different manners, to implicitly provide difference information about the workpiece for the model, and further improve performance of the defect detection model. In addition, the feature extraction module repeatedly uses a same group of neural network weights, without separately processing or learning a group of weights for each input, to reduce dependency on a training sample and improve training efficiency.

In a possible implementation, in a process of extracting the first image feature from the image, convolution may be first sequentially performed on the image in a plurality of stages, where

each stage includes at least one convolutional branch;

a first stage of the plurality of stages includes one convolutional branch taking the image as input;

for each of remaining stages after the first stage,

a new convolutional branch is added upon entering a next stage from the respective stage;

a resolution of the new convolutional branch is less than a resolution of any existing convolutional branch in the respective stage; and

a feature inputted to each convolutional branch in the respective stage is obtained by fusing features outputted by all convolutional branches in a previous stage.

Then, initial convolutional features outputted by convolutional branches in a last stage of the plurality of stages are fused to obtain a first convolutional feature.

Then, the first convolutional feature is downsampled to obtain the first image feature.

First, convolution is performed on the image in the plurality of stages. Convolution is performed for a plurality of times during convolution in each stage. During the first convolution, only low-level features such as lines or edges of a target object (for example, a structure of the workpiece) in an image can be extracted. With addition of convolution stages, deeper features, for example, high-level features such as a texture and a shape of the target object in the image, can be effectively extracted. This helps the defect detection model understand, in depth, specific content displayed in the image, to more accurately perform defect detection. In addition, during the plurality of times of convolution, a space size of an image can be effectively reduced, to reduce an amount of data for subsequent calculation.

After a high-level image feature is obtained, a new convolutional branch may be added. A resolution of the added convolutional branch is less than a resolution of any existing convolutional branch in a stage to which the added convolutional branch belongs, and an input for any existing convolutional branch in the stage to which the added convolutional branch belongs is obtained by fusing outputs of all convolutional branches in a previous stage.

By adding a convolutional branch with a smaller resolution, a feature that is of greater global significance or is more abstract can be detected based on an extracted feature, to gradually capture higher-level semantic information. In addition, noise in a feature can be reduced in the new convolutional branch, to improve reliability of the feature.

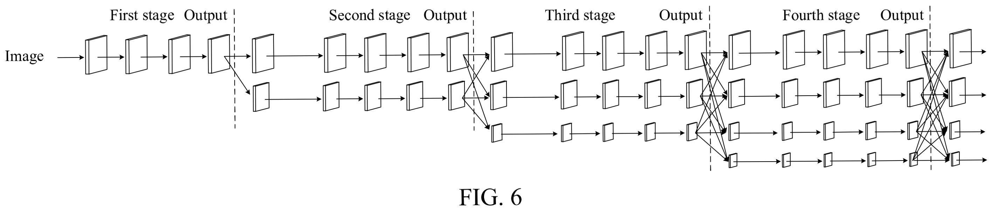

Specifically, FIG. 6 is a schematic diagram of a process of extracting a first image feature according to an embodiment of this disclosure. The process of extracting the first image feature from the image is implemented through parallel convolutional streams and has a plurality of stages. Starting from the first stage, data streams are gradually added from a high resolution to a low resolution. Resolutions of parallel data streams in a later stage include a resolution in a previous stage and a lower resolution. With a continuous increase in a quantity of stages, a quantity of different resolutions increases.

As shown in FIG. 6, a new convolutional branch is a data stream with a lowest resolution in a current stage to which the new convolutional branch belongs. An input for the new convolutional branch is obtained by downsampling features outputted by all convolutional branches in a previous stage. If there are a plurality of convolutional branches in the previous stage, features outputted by all the convolutional branches may be downsampled, to obtain features whose resolutions are the same as a resolution of the to-be-added convolutional branch. Then the features with the same resolution are fused (for example, through weighted fusion, concatenation, or superposition) to serve as an input for the new convolutional branch. In this way, a convolutional branch with a lower resolution is introduced, to obtain an image feature with a lower resolution.

In one example, the application of the defect detection model to the image and the differential image includes performing convolution in a plurality of stages. In this example, each stage incudes at least one convolutional branch, and each convolutional branch is configured to perform convolution for a plurality of times. In this example, a first stage of the plurality of stages including one convolutional branch taking the image as input. For each stage of the plurality of stages after the first stage, a new convolutional branch is added upon entering a next stage from the respective stage, a resolution of the new convolutional branch being less than that of any existing convolutional branch in the respective stage, and a feature inputted to each convolutional branch in the respective stage being obtained by fusing features outputted by all convolutional branches in a previous stage. In this example, the application of the defect detection model to the image and the differential image includes fusing initial convolutional features outputted by the convolutional branches in a last stage of the plurality of stages, to obtain a first convolutional feature; and downsampling the first convolutional feature to obtain the first image feature.

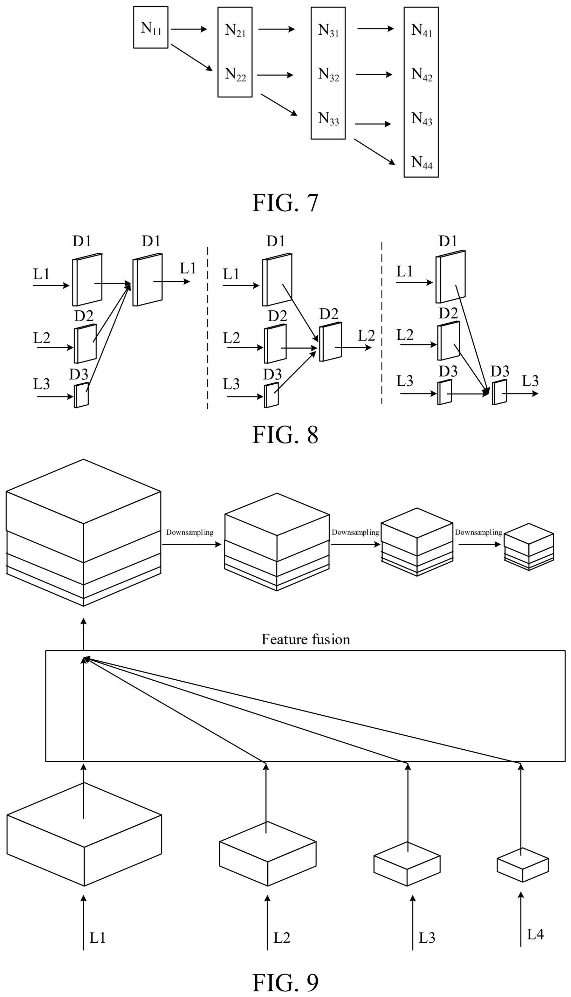

FIG. 7 is a schematic diagram of generating a data stream of a convolutional branch in a process of extracting a first image feature according to an embodiment of this disclosure. The extraction process shown in FIG. 7 corresponds to the extraction process shown in FIG. 6. The process of extracting the first image feature from the image may be divided into four stages.

A first stage includes one data stream N11 corresponding to one resolution. The resolution is a resolution (a first resolution) of an original convolutional branch for performing convolution on the image.

A second stage includes two data streams corresponding to two resolutions, including a data stream $N_{21}$ with the first resolution and a data stream $N_{22}$ with a resolution (a second resolution) lower than the first resolution. The second resolution is less than the first resolution.

By analogy, a third stage includes three data streams $N_{31}$, $N_{32}$, and $N_{33}$ corresponding to three resolutions, and a fourth stage includes four data streams $N_{41}$, $N_{42}$, $N_{43}$, and $N_{44}$ corresponding to four resolutions. In this way, a convolutional branch with a lower resolution is introduced, to obtain an image feature with a lower resolution.

When a new convolutional branch is added to a new convolution stage, features outputted by existing convolutional branches in a previous stage are correspondingly upsampled or downsampled, and added to an input for current convolution of a corresponding convolutional branch, so that an original feature learning path in the previous stage can be retained, and features at different resolution levels can be fused, to exchange feature information with different resolutions.

Specifically, FIG. 8 is a schematic diagram of a process of extracting a first image feature according to another embodiment of this disclosure. If a resolution of a current to-be-sampled convolutional branch is less than a resolution of a target convolutional branch, an output of the current to-be-sampled convolutional branch in a previous stage is upsampled to obtain an upsampling feature whose resolution is the same as the resolution of the target convolutional branch, and then the upsampling feature is used as an input for the target convolutional branch in a current stage, so that the target convolutional branch performs convolution on the upsampling feature.

If a resolution of a current to-be-sampled convolutional branch is greater than a resolution of a target convolutional branch, an output of the current convolutional branch in a previous stage is downsampled to obtain a downsampling feature whose resolution is the same as the resolution of the target convolutional branch, and then the downsampling feature is used as an input for the target convolutional branch in a current stage, so that the target convolutional branch performs convolution on the downsampling feature.

When N× downsampling is needed, sampling may be performed to a needed resolution through a plurality of times of downsampling.

If a resolution of a current to-be-sampled convolutional branch is equal to a resolution of a target convolutional branch, an output of the current to-be-sampled convolutional branch in a previous stage is retained as an input for the convolutional branch (the target convolutional branch) in a current stage, or an output of the current to-be-sampled convolutional branch in a previous stage is resampled as an input for the convolutional branch (the target convolutional branch) in a current stage.

As shown in FIG. 8, a first resolution D1 is greater than a second resolution D2, and the second resolution D2 is greater than a third resolution D3.

If the resolution of the target convolutional branch is the first resolution D1, a convolutional branch L1 corresponding to the first resolution may directly add a convolutional feature outputted by the convolutional branch in a previous stage to an input in a current stage; and a convolutional branch L2 corresponding to the second resolution D2 and a convolutional branch L3 corresponding to the third resolution need to upsample convolutional features outputted by the convolutional branches in the previous stage to the first resolution D1, and add the convolutional features to the input for the convolutional branch L1 in the current stage.

If the resolution of the target convolutional branch is the second resolution D2, a convolutional branch L1 corresponding to the first resolution needs to downsample a convolutional feature outputted by the convolutional branch in a previous stage to the second resolution D2, and add the convolutional feature to an input for a convolutional branch L2 in a current stage; the convolutional branch L2 corresponding to the second resolution may directly add a convolutional feature outputted by the convolutional branch in the previous stage to the input in the current stage; and a convolutional branch L3 corresponding to the third resolution needs to upsample a convolutional feature outputted by the convolutional branch in the previous stage to the second resolution D2, and add the convolutional feature to the input for the convolutional branch L2 in the current stage.

If the resolution of the target convolutional branch is the third resolution D3, a convolutional branch L1 corresponding to the first resolution and a convolutional branch L2 corresponding to the second resolution D2 need to downsample convolutional features outputted by the convolutional branches in a previous stage to the third resolution D3, and add the convolutional features to an input for a convolutional branch L3 in a current stage; and the convolutional branch L3 corresponding to the third resolution may directly add a convolutional feature outputted by the convolutional branch in the previous stage to the input in the current stage.

Therefore, when convolution starts in each stage, feature fusion is first performed on data currently inputted to each convolutional branch, to reduce an amount of data to be processed.

Multi-resolution fusion is repeatedly performed by repeatedly exchanging information in parallel data streams, to implement parallel concatenation and synchronous proceeding between a high resolution and a low resolution. In addition, information is continuously exchanged between a high-resolution feature and a low-resolution feature. An extracted high-resolution feature can make the first image feature more accurate in space in a subsequent feature fusion operation, and an extracted low-resolution feature can make the first image feature more semantically abundant in the subsequent feature fusion operation.

In a possible implementation, a process of fusing the initial convolutional features outputted by the convolutional branches in the last stage of the plurality of stages, to obtain the first convolutional feature may include: fusing the initial convolutional features to obtain a fusion feature; for each of the convolutional branches in the last stage, performing convolution on the fusion feature using a resolution of the respective convolutional branch, to obtain a second convolutional feature of the respective convolutional branch; and fusing second convolutional features of the convolutional branches in the last stage to obtain the first convolutional feature.

The plurality of second convolutional features with different resolutions are fused to obtain the first convolutional feature, so that the first convolutional feature can include more comprehensive and abundant feature information.

Then the first convolutional feature is downsampled and further compressed to obtain a feature representation, and a feature that is more abstract and has more global semantics is extracted to obtain the first image feature of the image.

Specifically, FIG. 9 is a schematic diagram of a process of extracting a first image feature according to another embodiment of this disclosure. As shown in FIG. 9, after initial convolutional features outputted by all convolutional branches (including a convolutional branch L1, a convolutional branch L2, a convolutional branch L3, and a convolutional branch L4) in the last stage are obtained, convolution is performed, based on resolutions of the convolutional branches, on the initial convolutional features outputted by the convolutional branches, so that each convolutional branch can obtain a second convolutional feature with a resolution the same as that of the convolutional branch.

Then all second convolutional features may be concatenated to form the first convolutional feature. In this case, a quantity of channels of the first convolutional feature is much greater than a quantity of channels of the image.

Then the first convolutional feature is downsampled, the target convolutional feature is compressed, and dimensionality of the first convolutional feature is reduced, so that a resolution of the first image feature is equal to a minimum resolution of output features in all the convolutional branches.

In a possible implementation, in a process of sequentially performing convolution on the image in the plurality of stages, when a minimum resolution in a current stage meets a pre-set resolution threshold, adding a new convolutional branch is stopped, and the current stage is used as a last stage of the convolution process, to be specific, each convolutional branch performs convolution for the last time.

Each time a new convolutional branch is introduced, more convolution operations are added. This is likely to reduce training efficiency due to excessively high complexity of the model. In addition, an excessively low resolution may cause loss of a large amount of useful detail information, affecting quality of the first image feature obtained through subsequent feature fusion. Therefore, whether the minimum resolution in the current stage meets the pre-set resolution threshold is determined, to determine whether the current stage is to be the last stage of the convolution process.

When the current stage is the last stage, an output (that is, an initial convolutional feature) of a current convolutional branch in the last stage is correspondingly upsampled or downsampled based on a resolution comparison result between the current convolutional branch and a remaining convolutional branch, to obtain a convolutional feature whose resolution corresponds to a resolution of the remaining convolutional branch, and obtain a second convolutional feature of each convolutional branch.

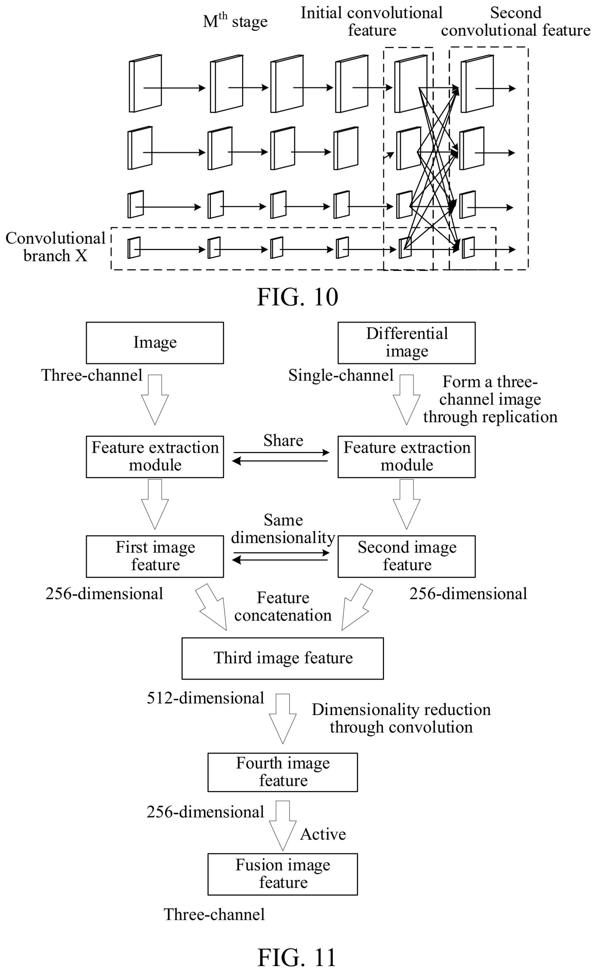

FIG. 10 is a schematic diagram of extracting a second convolutional feature according to an embodiment of this disclosure. As shown in FIG. 10, when a resolution corresponding to a new convolutional branch (a convolutional branch X) introduced into an Mth stage meets a pre-set resolution threshold, it can be determined that the Mth stage is a last stage of feature extraction. Therefore, initial convolutional features outputted by all convolutional branches in the Mth stage (the last stage) may be obtained, a plurality of initial convolutional features are fused, and then convolution with a resolution the same as that of each convolutional branch is performed on a fusion convolutional feature to obtain a second convolutional feature with a corresponding resolution.

Specifically, in a process of fusing the plurality of initial convolutional features, each initial convolutional feature may be upsampled or downsampled based on a resolution comparison result between the convolutional branch and a remaining convolutional branch, and added to a to-be-fusion feature set of a convolutional branch with a corresponding resolution in the $M^{th}$ stage. Then convolution with a corresponding resolution is performed on all initial convolutional features in the to-be-fusion feature set, to generate a second convolutional feature with a resolution the same as that of each convolutional branch.

In a possible implementation, a process of fusing the first image feature and the second image feature to obtain the target image feature may include: obtaining a third image feature, by concatenating a feature value of each pixel in the first image feature with a feature value of a corresponding pixel in the second image feature; reducing a dimension of the third image feature to obtain a fourth image feature; and activating the fourth image feature to obtain the target image feature.

FIG. 11 is a schematic diagram of a process of generating a target image feature according to an embodiment of this disclosure. The differential image is a grayscale image, namely, a single-channel image, and the image is an RGB color image, namely, a three-channel image. To reuse a feature extraction module to accelerate convergence of training, single-channel data of the differential image may be first replicated to form an image with three-channel data, so that a quantity of channels of the differential image is equal to a quantity of channels of the image. Then the differential image with the three-channel data and the image are separately input to a same feature extraction module in the defect detection model, to obtain the first image feature and the second image feature respectively. Dimensionality of the first image feature is the same as dimensionality of the second image feature, and both are 256.

The first image feature and the second image feature are concatenated to obtain the third image feature. The concatenation operation is equivalent to splicing two feature tensors along a channel dimension (or a feature dimension), to fuse and retain information included in the first image feature and the second image feature.

Dimensionality corresponding to the third image feature obtained through fusion is $256 \times 2$, and the third image feature has redundant information. Therefore, channel dimensionality reduction may be performed on the third image feature by using a $1 \times 1$ convolution kernel, to obtain the fourth image feature with dimensionality of 256, to reduce unnecessary feature dimensions, compress a feature representation, and reduce calculation overheads of subsequent processing. In addition, by mapping a high-dimensional feature to a low-dimensional space, a higher-level feature representation can be effectively extracted from the third image feature. This helps extract more global and abstract information, to improve quality and reliability of the fourth image feature.

Then the fourth image feature is activated by using an activation function, to obtain the target image feature. To be specific, a quantity of channels of the fourth image feature and a quantity of channels of the target image feature are the same as a quantity of channels of the image. In some embodiments, the activation function may be ReLU/Leaky ReLU, in which a nonlinear transformation applied to feature values only, without altering the spatial dimensions (height $\times$ width) or the number of channels of the feature map.

In a possible implementation, the defect detection model includes a plurality of concatenated network heads (i.e., a plurality of cascaded stages based on N network heads, N being a positive integer greater than one), a local region feature extractor connected to each network head, and a region proposal network (RPN). In a process of performing defect detection on the image based on the target image feature to obtain information of a bounding box for annotating a first defect region in the image, the target image feature may be first inputted to the RPN for region extraction, to obtain coordinates of a reference bounding box.

For the first network head, the coordinates of the reference bounding box and the target image feature are inputted to a first local region feature extractor connected to the first network head for pooling to obtain a pooling feature, the pooling feature is inputted to the first network head for defect detection, and coordinates of a detection bounding box are outputted.

For each of remaining network heads following the first network head, i.e., each of n-th network heads of the N network heads (n ranging from two to N), the (n-1)-th coordinates of the detection bounding box outputted by a previous network head and the target image feature are inputted to an n-th local region feature extractor connected to the n-th network head for pooling to obtain a pooling feature, the obtained pooling feature is inputted to the n-th network head for defect detection, and n-th coordinates of the bounding box are outputted.

The N-th coordinates of a detection bounding box outputted by the N-th network head are determined as the information of a bounding box.

Specifically, during pooling, a region of interest (ROI) pooling technology may be used to extract a feature region with a specific size. Convolutional feature maps corresponding to ROIs with different sizes are extracted from the target image feature based on a feature mapping relationship, and are pooled to form feature maps with same dimensionality.

The RPN is a fully convolutional network that uses an image with any size as an input to output a group of rectangular target proposals. Each proposal has a target score. Therefore, a boundary of the bounding box and a confidence level of the bounding box may be predicted for the target image feature through the RPN.

Specifically, the target image feature is inputted to the RPN, to extract a possible defect region in the target image feature, and output coordinates of a reference detection bounding box.

After initial coordinates of a reference bounding box are obtained through the RPN, a network head in a subsequent stage may obtain more detailed and accurate coordinates of the bounding box through optimization by using the initial coordinates of a reference bounding box.

All non-first network heads can receive an output of a previous network head. A multi-concatenation mode enables the network heads to continuously learn and extract higher-level feature representations, to further optimize and refine the bounding box, and improve accuracy of the bounding box.

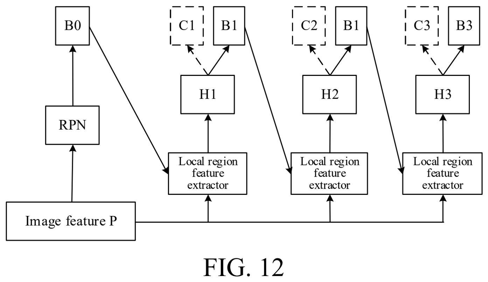

FIG. 12 is a schematic diagram of a defect detection process according to an embodiment of this disclosure. The defect detection model may be referred to as a cascaded region-based convolutional neural network (R-CNN) and includes a plurality of concatenated network heads. As shown in FIG. 12, the defect detection model may include a network head H1, a network head H2, a network head H3, and a local region feature extractors. The network head H1 is the first network head, and the network head H3 is the last network head.

First, the target image feature (namely, an image feature P) is inputted to the RPN for region extraction, to obtain coordinates of a reference bounding box B0.

Then the coordinates of a reference bounding box B0 and the image feature P are inputted to a first local region feature extractor for ROI pooling, to extract a pooling feature, and transmit the pooling feature to the first network head H1. The network head H1 can adjust a position and a size of the bounding box based on the coordinates of a reference bounding box B0, and then output coordinates of the bounding box B1. The network head H1 may further classify a defect, and output a classification result C1 of the coordinates of the bounding box B1. The classification result C1 is configured for indicating a defect category corresponding to the coordinates of the bounding box B1.

Then the coordinates of the bounding box B1 and the image feature P are inputted to a second local region feature extractor for ROI pooling, to extract a pooling feature in this stage, and transmit the pooling feature to the next network head H2 for defect detection. The position and the size of the bounding box are further adjusted, and new coordinates of the bounding box B2 are outputted. In addition, the network head H2 may further output a classification result C2 configured for indicating a defect category of the coordinates of the bounding box B2.

Then the coordinates of the bounding box B2 and the image feature P are inputted to a third local region feature extractor for ROI pooling. After a new pooling feature is extracted, the new pooling feature is inputted to the last network head H3. The network head H3 performs last defect detection based on the pooling feature, adjusts the position and the size of the bounding box again, outputs new coordinates of the bounding box B3, and uses the coordinates of the bounding box B3 as the information of a bounding box of the image. In addition, the network head H3 may also detect a classification result C3 corresponding to the coordinates of the bounding box B3, so that the information of a bounding box of the image may further include a classification result of a defect category of a corresponding bounding box.

A detection result in each stage affects effect of defect detection in a next stage. Therefore, the model can gradually improve a detection result through iteration. To be specific, a reference bounding box is roughly located through the RPN, and then a position and a size of the bounding box are continuously refined through a plurality of concatenated network heads, to improve detection accuracy.

In a possible implementation, the information of the bounding box may include coordinates of the bounding box, a confidence probability associated with the bounding box, and a defect category associated with the bounding box. A process of determining a second detection result of the workpiece based on the information of the bounding box and the first detection result may include: when the first detection result indicates that the workpiece has no defect, obtaining a pre-set confidence probability threshold and a pre-set area threshold that correspond to the defect category; determining a defect area based on the coordinates, and determining a first comparison result between the defect area and the pre-set area threshold, and a second comparison result between the confidence probability and the pre-set confidence probability threshold; and determining the second detection result based on the first comparison result and the second comparison result.

When the first detection result indicates that the workpiece has no defect, it is determined, based on the differential image, that the workpiece has no visually clear defect. Therefore, the information of a bounding box outputted by the defect detection model may be filtered by using the pre-set confidence probability threshold and the pre-set area threshold, to further determine whether the workpiece has a defect, and reduce occurrence of false positives and false negatives.

While outputting coordinates of the bounding box, the defect detection model further outputs a defect category (that is, the classification result in FIG. 12) and a confidence probability that correspond to the coordinates of the bounding box.

The workpiece may include a plurality of defect categories, such as stain, discoloration, scratches, damage, and dents. The workpiece has different quality inspection criteria for different defect categories. Therefore, the pre-set confidence probability threshold and the pre-set area threshold, that is, the quality inspection criteria, need to be obtained based on a defect category corresponding to each bounding box. A first comparison result between a defect area of the bounding box and the pre-set area threshold, and a second comparison result between a detection confidence probability and the pre-set confidence probability threshold are separately obtained through comparison, to determine whether the bounding box includes a defect that fails quality inspection.

The first comparison result is configured for indicating whether the defect area exceeds the pre-set area threshold, and may indicate quality of the workpiece. If the defect area is greater than or equal to the pre-set area threshold, it can be considered that the quality of the workpiece does not meet a criterion, and the workpiece has a defect.

The second comparison result is configured for indicating a possibility of the bounding box, and may indicate a possibility that the workpiece has the defect. If the second comparison result is the confidence probability being greater than the pre-set confidence probability threshold, it can be considered that the workpiece has a defect at a position of the corresponding bounding box.

The second detection result of the workpiece is determined based on the first comparison result and the second comparison result, and determining logic may be adjusted based on an actual quality inspection status. For example, when the first comparison result is the defect area being greater than or equal to the pre-set area threshold or the second comparison result is the confidence probability being greater than the pre-set confidence probability threshold, it can be determined that the second detection result of the workpiece is that the workpiece has a defect and fails quality inspection. For another example, when the first comparison result is the defect area being greater than or equal to the pre-set area threshold and the second comparison result is the confidence probability being greater than the pre-set confidence probability threshold, it can be determined that the second detection result of the workpiece is that the workpiece has a defect.

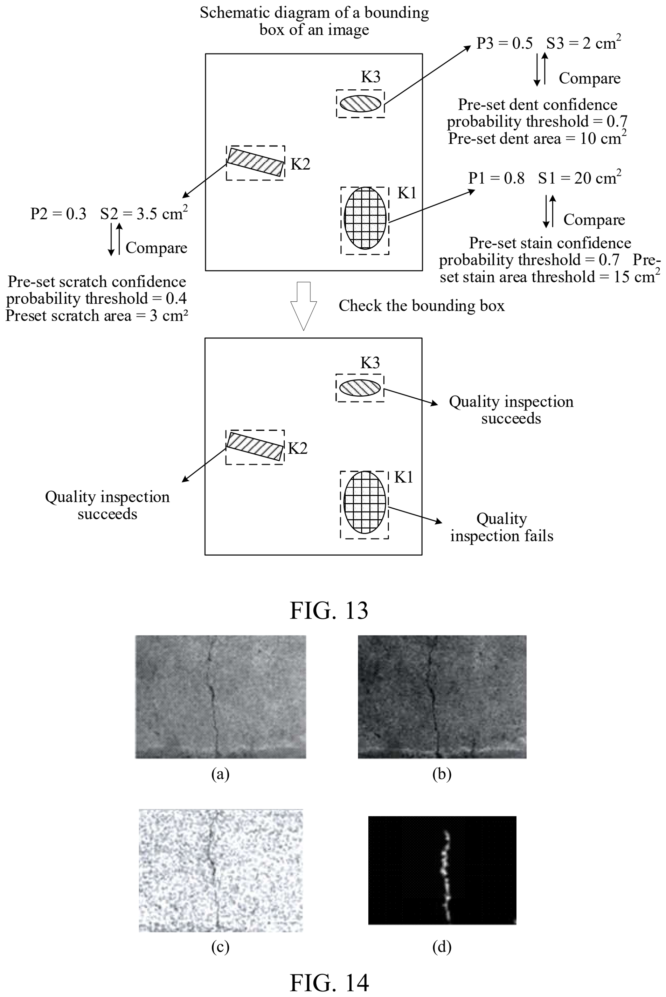

Specifically, FIG. 13 is a schematic diagram of a process of determining a second detection result according to an embodiment of this disclosure. When the first detection result indicates that the workpiece has no defect, the information of a bounding box outputted by the defect detection model is obtained. The information of a bounding box specifically includes coordinates of the bounding box K1, coordinates of the bounding box K2, and coordinates of the bounding box K3. A confidence probability P1 corresponding to the coordinates of the bounding box K1 is 0.8, and a corresponding defect category is stain. A confidence probability P2 corresponding to the coordinates of the bounding box K2 is 0.3, and a corresponding defect category is scratches. A confidence probability P3 corresponding to the coordinates of the bounding box K3 is 0.5, and a corresponding defect category is dents.

Then pre-set confidence probability thresholds and pre-set area thresholds that respectively correspond to the defect categories of stain, scratches, and dents are obtained. Specifically, a pre-set stain confidence probability threshold corresponding to stain is 0.7, and a pre-set stain area threshold is 15 cm$^2$; a pre-set scratch confidence probability threshold corresponding to scratches is 0.4, and a pre-set scratch area is 3 cm$^2$; and a pre-set dent confidence probability threshold corresponding to dents is 0.7, and a pre-set dent area is 10 cm$^2$.

Then a corresponding defect area is determined based on the coordinates of the bounding box. Specifically, a stain defect area S1 obtained through calculation by using the coordinates of the bounding box K1 is 20 cm$^2$, a scratch defect area S2 obtained through calculation by using the coordinates of the bounding box K2 is 3.5 cm$^2$, and a dent defect area S3 obtained through calculation by using the coordinates of the bounding box K3 is 2 cm$^2$.

By comparing a defect area of each defect category with the pre-set area threshold and comparing a confidence probability with the pre-set confidence probability threshold, it can be found that a first comparison result of the stain category is the stain defect area being greater than the pre-set stain area threshold, and a second comparison result of the stain category is a stain confidence probability being greater than the pre-set stain confidence probability. Therefore, it is considered that a defect annotated by the coordinates of the bounding box K1 is a defect failing quality inspection. A first comparison result of the dent category is the dent defect area being less than the pre-set dent area threshold, and a second comparison result of the scratch category is a scratch confidence probability being less than the pre-set scratch confidence probability. Therefore, it can be considered that defects annotated by the coordinates of the bounding box K2 and the coordinates of the bounding box K3 are defects that can succeed in quality inspection. However, the workpiece has a defect that fails quality inspection, that is, the defect annotated by the coordinates of the bounding box K1. Therefore, it can be determined that the second detection result of the workpiece is that the workpiece has a defect and fails quality inspection.

In a possible implementation, when the first detection result indicates that the workpiece has a defect, it is determined that the second detection result of the workpiece is that the workpiece has a defect. If the first detection result indicates that the workpiece has a defect, the workpiece has a visually clear defect. No further determining needs to be performed, and it can be directly determined that the second detection result of the workpiece is that the workpiece has a defect, to improve efficiency of defect detection.

Defect detection may be performed on the workpiece separately based on a comparison method and a model-based prediction method.

A first detection result is first obtained for the workpiece based on the comparison method. If the first detection result is that the workpiece has a defect, it can be directly determined that a second detection result indicating that the workpiece has a defect is that the workpiece has a defect, and information of a bounding box obtained by using the model-based prediction method does not need to be considered.

If a reference defect result is that the workpiece has no defect, information of a bounding box outputted by the defect detection model needs to be obtained, and then comparison is performed, based on coordinates of the bounding box and a confidence probability in the information of a bounding box and a defect category, with a pre-set confidence probability threshold and a pre-set area threshold that correspond to the defect category, to determine a target reference defect result.

In a possible implementation, in a process of comparing the image with the template image to obtain the differential image, a transformation parameter between the image and the template image may be first determined; a workpiece object displayed in the template image is aligned with a workpiece object displayed in the image based on the transformation parameter, to obtain an aligned image; the aligned image is compared with the template image to obtain an initial differential image; and the initial differential image is filtered to obtain the differential image.

The image of the workpiece is usually captured by a camera device, a photographing position or a placement direction of each workpiece is likely to deviate, and the image and the template image are obtained under different conditions, for example, at different time or different viewing angles. Consequently, the workpiece displayed in the obtained image can be hardly aligned with the workpiece displayed in the template image, affecting comparison effect.

Therefore, the image may be aligned with the template image, so that the workpiece displayed in the image is aligned with the workpiece displayed in the template image, to improve comparison effect, and improve accuracy of an initial differential image.

Specifically, the transformation parameter between the image and the template image is first determined, and the image and the template image are aligned to same coordinate space, so that pixels at a same coordinate position correspond to a same actual position, to ensure that comparison is performed between content in a same region during comparison.

The transformation parameter is determined, and image alignment is performed, so that the image and the template image are consistent in space. This helps effectively extract information in the two images, and eliminate noise resulting from a view difference, to help obtain a more accurate initial differential image.

FIG. 14 is a schematic diagram of effect of morphological filtering according to an embodiment of this disclosure. Even if image alignment is performed between the image and the template image, edge regions of the two images inevitably include parts that cannot be aligned, likely leading to noise and interfering with generation of a differential image. Therefore, morphological image processing and filtering (such as expansion, corrosion, filtering, and smoothing) may be performed on the initial differential image to eliminate edge noise.

As shown in section (a) in FIG. 14, a corrosion operation may be performed on the initial differential image, to erode or narrow an edge in the initial differential image, to obtain an eroded effect image shown in section (b) in FIG. 14. To be specific, each pixel $f(x, y)$ in the initial differential image $f$ is replaced with a minimum value in a set B (adjacent pixels), and a corrosion operation is performed on the initial differential image $f$ by using the set B. A specific formula is shown as follows:

$$f \ominus B = min[f(x + s, y + t)] \quad (s, t) \in B \qquad (2)$$

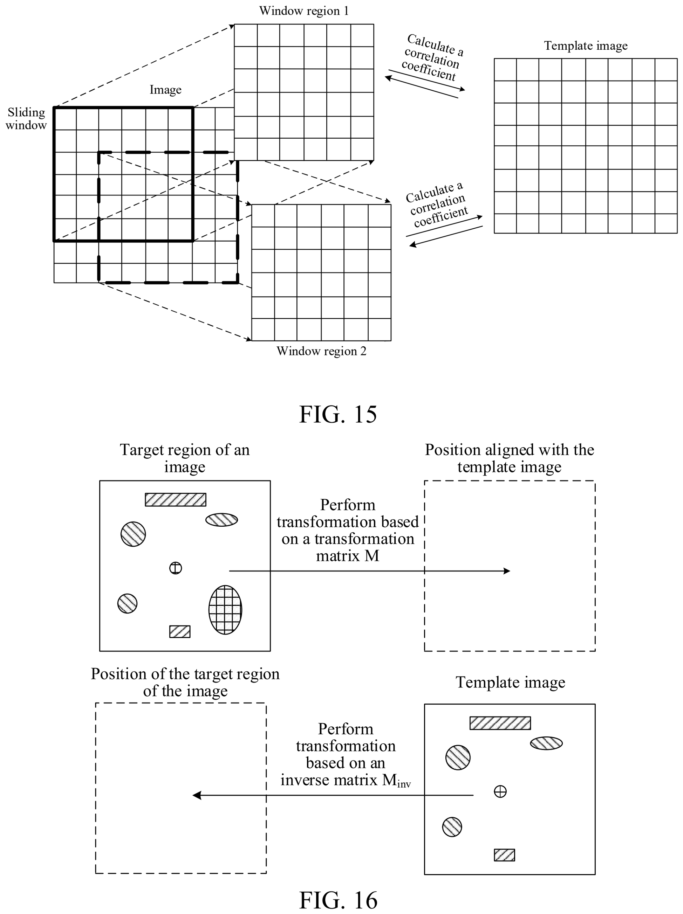

In another embodiment, an edge in the initial differential image may be expanded to obtain an expanded effect image shown in section (c) in FIG. 16. To be specific, each pixel $f(x, y)$ in the initial differential image $f$ is replaced with a maximum value in a set C (adjacent pixels), and an expansion operation is performed on the initial differential image $f$ by using the set C. A specific formula is shown as follows:

$$f \oplus C = max[f(x + w, y + v)] \quad (w, v) \in C \qquad (3)$$

After the morphological filtering, noise at an edge of the initial differential image may be removed to obtain a differential image. The differential image and the image are inputted to the defect detection model, to assist the model in performing feature extraction and defect detection, so that the model can accurately locate a defect region image shown in section (d) in FIG. 14. The defect region image is partial image information in the information of a bounding box outputted by the model.

In a possible implementation, a process of determining the transformation parameter between the image and the template image may include: determining, by using a sliding window, a plurality of window regions in the image; for each of the plurality of window regions, calculating a correlation coefficient between image content in the respective window region and image content in a window region corresponding to the respective window region in the template image; determining a target region in the image based on correlation coefficients of the plurality of window regions; determining a transformation matrix used for transforming the target region into a region corresponding to the target region in the template image; and determining an inverse matrix of the transformation matrix as the transformation parameter.

FIG. 15 is a schematic diagram of a process of determining a correlation coefficient according to an embodiment of this disclosure. In a sliding window method, the image is slid based on a size of a window, and a correlation coefficient between corresponding window regions in the template image and the image is calculated each time, so that a similarity between the two images can be measured. In this way, a region most similar to the template image, that is, a window region with a largest correlation coefficient, can be found in the image as the target region.

After the target region is obtained, the transformation matrix may be determined. The transformation matrix describes geometrical transformation, such as displacement, rotation, or distortion, needed for converting the target region in the image into a region aligned with the template image. The transformation matrix M may be as follows:

$$\begin{pmatrix} s\cos\theta & -s\sin\theta & t_x \\ s\sin\theta & -s\cos\theta & t_y \\ 0 & 0 & 1 \end{pmatrix}$$

$(t_x, t_y)$ in the transformation matrix M represents a displacement vector. A rotation angle $\theta$ is added based on the displacement vector. A zooming transformation parameter s is added based on the displacement and the rotation to implement similarity transformation. The similarity transformation makes a distance between points change before and after the transformation, but keeps an angle unchanged.

FIG. 16 is a schematic diagram of a similarity transformation correspondence between a template image and an image according to an embodiment of this disclosure. After the transformation matrix M is determined, the inverse matrix $M_{inv}$ of the transformation matrix M further needs to be calculated. The inverse matrix $M_{inv}$ can be used for transformation from the template image to the target region in the image, to be specific, transforming the workpiece displayed in the template image to a position of a workpiece displayed in the target region in the image, to align the workpieces.

A correlation coefficient between corresponding regions in the template image and the image may be calculated based on a correlation between a relative value of a pixel value of a pixel in the template image with respect to an average pixel value of the template image, and a relative value of a pixel value of a pixel in a corresponding region in the image with respect to an average pixel value of the corresponding region. A larger correlation coefficient indicates higher matching between corresponding regions in the image and the template image. A calculation formula for the correlation coefficient is as follows:

$$R(x, y) = \frac{\sum_{x',y'}[T'(x',y')I'(x+x',y+y')]}{\sqrt{\sum_{x',y'}T'(x',y')^2 \sum_{x',y'}I'(x+x',y+y')^2}} \tag{4}$$

$T'(x', y')$ represents a relative value of a pixel value at coordinates $(x', y')$ in the template image with respect to an average pixel value of the template image. $I'(x+x', y+y')$ represents a relative value of a pixel value at coordinates $(x+x', y+y')$ in a corresponding window region in the image with respect to an average pixel value of the window region.

In a possible implementation, grayscale conversion may be separately performed on the template image and the image, and then a difference, a mean absolute difference, a sum of absolute differences, a mean squared error, a normalized product, or the like is calculated as the correlation coefficient based on a grayscale value of a sliding window region in the image and a grayscale value of the template image, to determine the target region.

In a possible implementation, image matching may be performed between the sliding window region in the image and the template image by using a deep learning-based registration algorithm, for example, a graph convolutional neural network-based feature matching algorithm (SuperGlue) or a deep learning-based self-supervised feature point detection algorithm (SuperPoint).

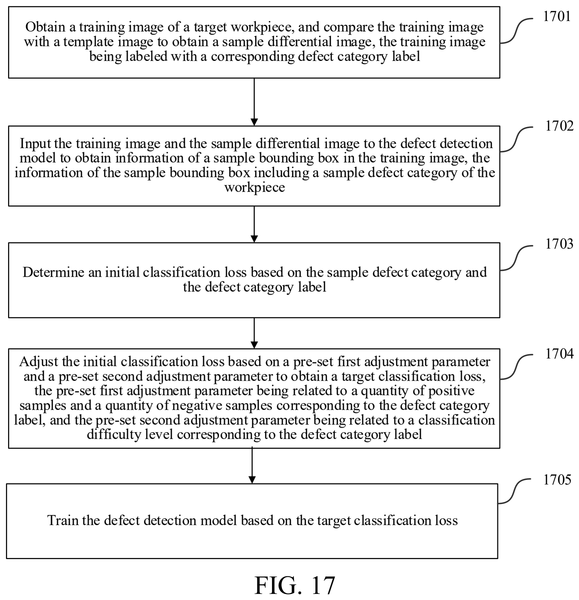

In a possible implementation, FIG. 17 is a schematic diagram of a training process for a defect detection model according to an embodiment of this disclosure. The defect detection model may be obtained through training through the following operation 1701 to operation 1705.

Operation 1701: Obtain a training image of a workpiece, and compare the training image with a template image to obtain a sample differential image, the training image being labeled with a corresponding defect category label.

Operation 1702: Input the training image and the sample differential image to the defect detection model to obtain information of a sample bounding box in the training image, the information of the sample bounding box including a sample defect category of the workpiece.

Operation 1703: Determine an initial classification loss based on the sample defect category and the defect category label.

Operation 1704: Adjust the initial classification loss based on a pre-set first adjustment parameter and a pre-set second adjustment parameter to obtain a target classification loss, the pre-set first adjustment parameter being related to a quantity of positive samples and a quantity of negative samples corresponding to the defect category label, and the pre-set second adjustment parameter being related to a classification difficulty level corresponding to the defect category label.

Operation 1705: Train the defect detection model based on the target classification loss.

Specifically, a defect feature of the workpiece can be better learned by comparing the training image with the template image, and the sample differential image helps highlight a difference between a defect region and a normal region. Then the training image and the sample differential image are inputted to the defect detection model. The sample differential image provides difference information for the model, to assist the model in learning and training, and improve a generalization capability of the model.

The initial classification loss may be determined based on a cross-entropy loss function by using the sample defect category and the defect category label.

Then the first adjustment parameter and the second adjustment parameter are pre-set, and the initial classification loss may be adjusted by using the first adjustment parameter and the second adjustment parameter, to obtain a target loss function. Specifically, the target loss function may be expressed as the following formula:

$$Loss(x, class) = -\alpha_{class}\left(1 - \frac{e^{x[class]}}{\sum_j e^{x[j]}}\right)^{\gamma} log\left(\frac{e^{x[class]}}{\sum_j e^{x[j]}}\right) \tag{5}$$

$x$ represents a prediction store vector outputted by the defect detection model. *class* represents the defect category label. $x[class]$ represents an original prediction score of the defect detection model with respect to that a currently outputted defect belongs to a specific category. $\alpha_{class}$ represents the first adjustment parameter. $\gamma$ represents the second adjustment parameter. $\frac{e^{x[class]}}{\sum_j e^{x[j]}}$ represents a cross-entropy operation process. An original output of the model is converted into a probability form, to obtain a prediction probability that the currently outputted defect belongs to the specific category. A higher prediction probability indicates that the currently outputted defect is closer to the specific type and classification is more accurate.

In comparison with the cross-entropy loss function, a modulation factor $\left(1 - \frac{e^{x[class]}}{\sum_j e^{x[j]}}\right)^{\gamma}$ is added to the target loss function. For an accurately classified sample, a prediction probability approaches 1, and the modulation factor approaches 0. For an inaccurately classified sample, the modulation factor approaches 0. Therefore, in comparison with the cross-entropy loss function, in the target loss function, for an inaccurately classified sample, a loss does not change; and for an accurately classified sample, a loss decreases. Therefore, from an overall perspective, this is equivalent to increasing a weight of an inaccurately classified sample in the target loss function. In addition, the outputted prediction probability can indicate a classification difficulty level of the model. A higher prediction probability indicates a higher classification confidence level of the model and indicates that it is easier to classify a sample. A lower prediction probability indicates a lower classification confidence level of the model and indicates that it is more difficult to classify a sample.

Therefore, the target loss function can increase a weight of a sample with low distinguishability in the target loss function, so that the target loss function focuses more on the sample with low distinguishability. This helps improve accuracy of classifying a difficult sample.

It is easy to obtain a training image of a workpiece without a defect, but it is difficult to obtain a workpiece with a defect. In addition, with an increase in a quantity of defect categories, a larger quantity of defect samples are needed. Therefore, an imbalance between a quantity of positive samples and a quantity of negative samples may be suppressed by using the first adjustment parameter, and an imbalance between a quantity of simple samples and a quantity of samples with low distinguishability may be controlled by using the second adjustment parameter. A positive sample may be expressed as a sample image of a workpiece with a defect, and a negative sample may be expressed as a sample image of a workpiece without a defect.

It can be learned from the foregoing formula (5) that a loss ratio between positive samples and negative samples is adjusted by using the first adjustment parameter, and a loss ratio between difficult samples and simple samples is adjusted by using the second adjustment parameter, to address an imbalance between categories during object detection, and reduce a weight of a sample that can be easily classified, so that the model focuses more on a difficult sample during training.

In a possible implementation, the second adjustment parameter may include a first decoupling factor and a second decoupling factor. The first decoupling factor is expressed as a base value for adjusting a loss ratio between samples corresponding to different classification difficulty levels. The second decoupling factor is expressed as a variable parameter related to an imbalance between samples of each category.

Specifically, refer to the second adjustment parameter $\gamma$ in the formula (5).

$$\gamma = \gamma_b + \gamma_v^j = \gamma_b + s(1 - g^j)$$ , where $\gamma_b$ represents the first decoupling factor, $\gamma_v^j$ represents the second decoupling factor, $j$ represents a sample of a $j^{th}$ category, and $g^j$ represents a training balance coefficient of the sample of the $j^{th}$ category. A larger value of $g^j$ indicates that training of the sample of the $j^{th}$ category is more balanced. A smaller value of $g^j$ indicates that training of the sample of the category is more unbalanced. $s$ represents a scaling factor, in the target loss function, that determines an upper limit of the second adjustment parameter, to be specific, is configured for assisting in adjusting an imbalance between a quantity of simple samples and a quantity of samples with low distinguishability.

Therefore, the second adjustment parameter is decoupled to form the first decoupling factor and the second decoupling factor, so that an imbalance between samples of each category can be independently processed by using the first decoupling factor and the second decoupling factor, to improve performance of the model. Specifically, for example, a total quantity of sample categories is C. The target loss function based on the first adjustment parameter, the first decoupling factor, and the second decoupling factor may be expressed as the following formula:

$$Loss(x, class) = -\sum_j^C \alpha_{class} \left(\frac{\gamma_b + \gamma_v^j}{\gamma_b}\right) \left(1 - \frac{e^{x[class]}}{\sum_j e^{x[j]}}\right)^{\gamma_b + \gamma_v^j} log\left(\frac{e^{x[class]}}{\sum_j e^{x[j]}}\right) \quad (6)$$

In a possible implementation, during training of the defect detection model, the information of the sample bounding box includes a bounding box and a corresponding confidence level. After the information is obtained, non-maximum suppression may be performed based on the confidence level. Sorting is performed based on confidence levels corresponding to bounding boxes. A bounding box of a difficult sample (with a low confidence level) is inputted to training in a next stage for forward propagation and back propagation, so that the model can obtain more targeted information during supervised training, to improve a speed and quality of training.

Specifically, an intersection over union (IoU) of each bounding box is calculated. The IoU is a ratio of an intersection set between each bounding box and a bounding box currently having a highest confidence level to a union set thereof. A confidence level corresponding to each bounding box is adjusted based on the IoU of each bounding box. When the IoU exceeds a pre-set ratio threshold, the confidence level corresponding to the bounding box is reduced. If the IoU does not exceed the pre-set ratio threshold, the confidence level corresponding to the bounding box is not adjusted. Specifically, an adjustment formula for a confidence level is as follows:

$$s_i = \begin{cases} s_i, & IoU(M, b_i) < N_t \\ s_i(1 - IoU(M, b_i)), & IoU(M, b_i) \geq N_t \end{cases} \quad (7)$$

$N_t$ represents the pre-set ratio threshold. $IoU(M, b_i)$ represents an IoU of a bounding box. M represents a bounding box with a highest confidence level. $b_i$ represents a current bounding box. $s_i$ represents a confidence level of the current bounding box $b_i$. Therefore, overlapping and unclear defects can be retained, to reduce probabilities of missing detection and false detection.

In a possible implementation, in a process of training the defect detection model based on the target classification loss, a coordinate difference of a bounding box may be further determined based on coordinates of the bounding box in the sample detection bounding box information and coordinates of an actual label detection bounding box annotated in the training image. Then a regression loss of the bounding box is determined based on the coordinate difference. Then the defect detection model is trained based on the regression loss and the target classification loss.

Therefore, the defect detection model is trained based on to the regression loss and the target classification loss, fitted regression is performed on the coordinates of the bounding box by using the regression loss, and a category of the bounding box is supervised and constrained by using the target classification loss, to provide guidance for the defect detection model in regression and classification of the bounding box, improve performance of the defect detection model, and alleviate impact of an imbalance between sample categories in the defect detection model.

In a possible implementation, the sample detection bounding box information in the training image further includes the coordinates of the bounding box. Therefore, a difference between a bounding box predicted by the model and the actual label detection bounding box of the training image at coordinates (x, y, w, h) may be calculated. The x element represents a horizontal coordinate of a center of the detection bounding box. The y element represents a vertical coordinate of the center of the detection bounding box. The w element represents a width of the detection bounding box, to be specific, a size along a horizontal direction of the image. The h element represents a height of the detection bounding box, to be specific, a size along a vertical direction of the image.

Specifically, the bounding box and the actual label detection bounding box may be separately normalized, to eliminate impact of the sizes, and obtain a more accurate coordinate difference. Then the regression loss of the bounding box may be calculated based on the coordinate difference of the bounding box by using a regression loss function, for example, a smooth L1 loss function, and then fitted regression may be performed on the detection bounding box by using the regression loss.

Specifically, the regression loss may be optimized by using a gradient descent method. During optimization, parameters of the model are continuously updated, so that a bounding box predicted and outputted by the model gradually approaches the actual label detection bounding box. By minimizing the regression loss, the defect detection model can obtain a more accurate bounding box through fitting.

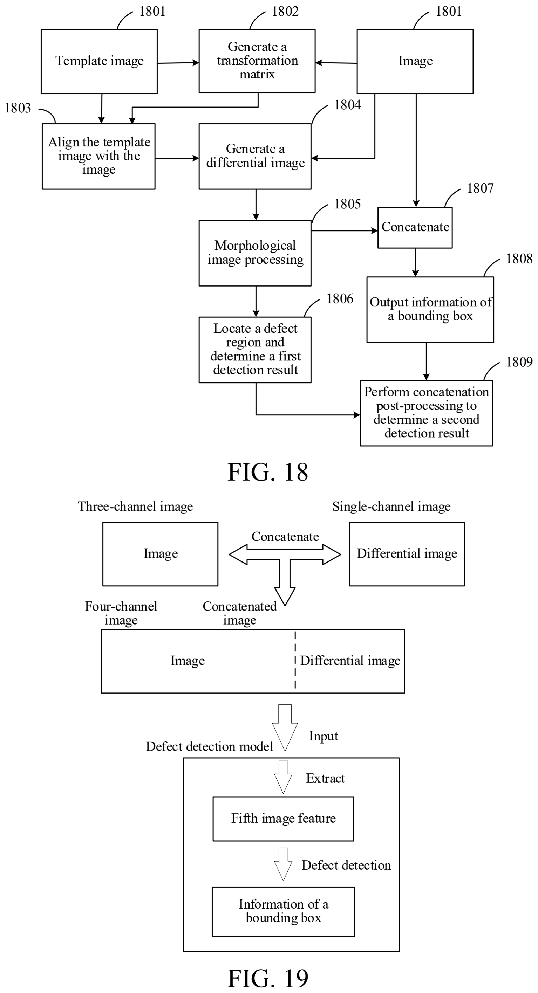

In a possible implementation, FIG. 18 is a schematic diagram of a defect detection process according to another embodiment of this disclosure. As shown in FIG. 18, a defect detection process for a workpiece may include two branch processes, and one of the branch processes may include the following operations:

1801: Obtain a template image and an image of the workpiece.

1802: Perform image alignment between the image and the template image to generate a transformation matrix.

1803: Rotate and translate the template image, using the transformation matrix, to align the template image with the image.

1804: Compare the image with the template image to generate a differential image.

1805: Perform morphological image processing, such as expansion and corrosion, on the differential image, and filter a noise region (a differential outlier resulting from a slight offset of the workpiece).

1806: Locate a defect region in the differential image based on a logic algorithm, and determine a first detection result.

The other branch process may include the following operations:

1807: Concatenate an image feature of the differential image with an image feature of the image to form four-channel image feature data.

1808: Perform defect detection by using a defect detection model, and output information of a bounding box.

1809: Perform concatenation post-processing based on the first detection result and the information of a bounding box, to determine a second detection result of the workpiece.

In the operation of determining the second detection result of the workpiece based on the first detection result and the information of a bounding box, the first detection result and the information of a bounding box may be inputted to a concatenation post-processing model for quality inspection prediction, to output the second detection result of the workpiece.

In a possible implementation, in a process of inputting the image and the differential image to the defect detection model to extract a target image feature, the image and the differential image may be concatenated to obtain a concatenated image, and then the concatenated image is inputted to the defect detection model to extract the target image feature of the concatenated image.

In a possible implementation, scale transformation is first performed between the image and the differential image, to ensure that corresponding dimensionality of the two images in a concatenation direction is consistent. The concatenation between the image and the differential image may be horizontal concatenation or longitudinal concatenation. To be specific, the two images are spliced together along a horizontal direction of the image, or the two images are spliced together along a vertical direction of the image.

FIG. 19 is a schematic diagram of a process of generating information of a bounding box according to another embodiment of this disclosure. The image is a three-channel RGB color image, and the differential image may be a single-channel gray image. The image and the differential image are directly concatenated to form a concatenated image. The concatenated image is a four-channel image.

Feature extraction does not need to be separately performed on the image and the differential image, to reduce a loss caused by feature extraction. The concatenated image can retain original feature information of the two images. This facilitates mining and learning of the model, to extract a more accurate target image feature. In addition, inputting the concatenated image to the defect detection model can provide difference information between different images at a same position, to help improve detection accuracy of the model.

The target image feature is extracted based on the concatenated image, the concatenated image is generated by splicing the image and the differential image, and the differential image carries difference information between the workpiece and a reference workpiece. Therefore, the target image feature can capture key difference information, so that the target image feature can be used to assist the model in performing defect detection, to improve accuracy of the information of a bounding box.

The following describes in detail a defect detection method provided in an embodiment of this disclosure.

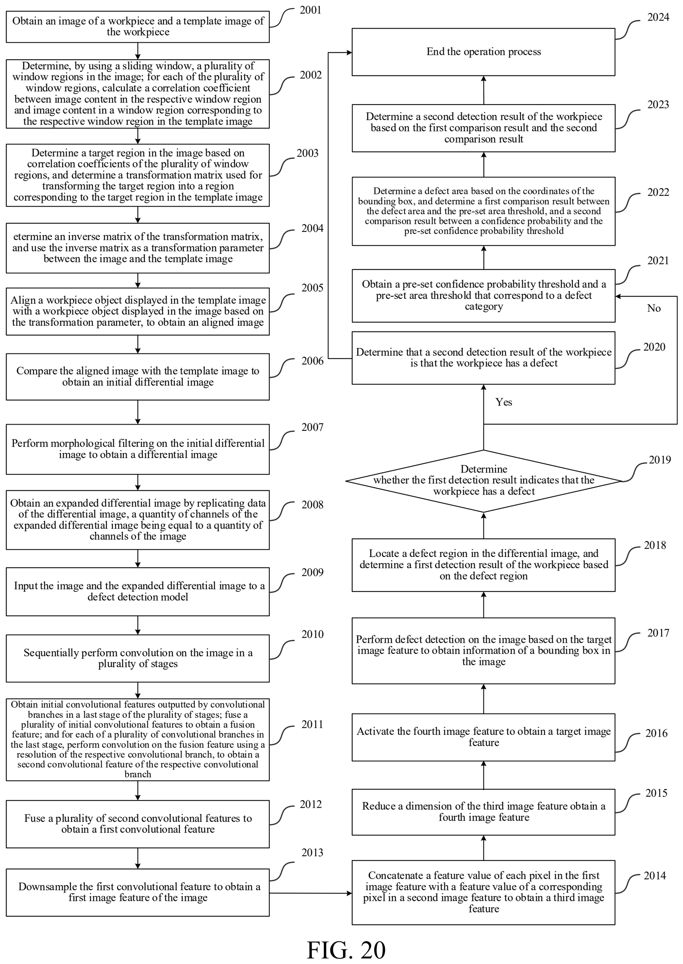

FIG. 20 is an exemplary schematic diagram of an overall process of a defect detection method according to an embodiment of this disclosure. The defect detection method includes but is not limited to the following operation 2001 to operation 2024.

Operation 2001: Obtain an image of a workpiece and a template image of the workpiece.

Operation 2002: Determine, by using a sliding window, a plurality of window regions in the image; for each of the plurality of window regions, calculate a correlation coefficient between image content in the respective window region and image content in a window region corresponding to the respective window region in the template image.

Operation 2003: Determine a target region in the image based on correlation coefficients of the plurality of window regions, and determine a transformation matrix used for transforming the target region into a region corresponding to the target region in the template image.

Operation 2004: Determine an inverse matrix of the transformation matrix, and use the inverse matrix as a transformation parameter between the image and the template image.

Operation 2005: Align a workpiece object displayed in the template image with a workpiece object displayed in the image based on the transformation parameter, to obtain an aligned image.

Operation 2006: Compare the aligned image with the template image to obtain an initial differential image.

Operation 2007: Perform morphological filtering on the initial differential image to obtain a differential image.

Operation 2008: Obtain an expanded differential image by replicating data of the differential image, a quantity of channels of the expanded differential image being equal to a quantity of channels of the image.

Operation 2009: Input the image and the expanded differential image to a defect detection model.

In this operation, the image and the expanded differential image share a same feature extraction module in the defect detection model.

Operation 2010: Sequentially perform convolution on the image in a plurality of stages.

In this operation, each stage includes at least one convolutional branch; a first stage of the plurality of stages includes one convolutional branch taking the image as input; for each of remaining stages after the first stage, a new convolutional branch is added upon entering a next stage from the respective stage; a resolution of the new convolutional branch is less than a resolution of any existing convolutional branch in the respective stage; and a feature inputted to each convolutional branch in the respective stage is obtained by fusing features outputted by all convolutional branches in a previous stage.

Operation 2011: Obtain initial convolutional features outputted by convolutional branches in a last stage of the plurality of stages; fuse a plurality of initial convolutional features to obtain a fusion feature; and for each of a plurality of convolutional branches in the last stage, perform convolution on the fusion feature using a resolution of the respective convolutional branch, to obtain a second convolutional feature of the respective convolutional branch.

In this operation, during last convolution, for any second convolutional branch, a feature outputted by the current convolutional branch is upsampled or downsampled based on a resolution comparison result between the current convolutional branch and a remaining second convolutional branch, and added to an input for last convolution of the remaining second convolutional branch. Then an initial convolutional feature outputted by last convolution of each second convolutional branch is obtained.

Operation 2012: Fuse a plurality of second convolutional features to obtain a first convolutional feature.

Operation 2013: Downsample the first convolutional feature to obtain a first image feature of the image.

Operation 2014: Concatenate a feature value of each pixel in the first image feature with a feature value of a corresponding pixel in a second image feature to obtain a third image feature.

Operation 2015: Reduce a dimension of the third image feature to obtain a fourth image feature.

Operation 2016: Activate the fourth image feature to obtain a target image feature.

Operation 2017: Perform defect detection on the image based on the target image feature to obtain information of a bounding box in the image.

In this operation, the defect detection model includes a plurality of concatenated network heads, a local region feature extractor connected to each network head, and an RPN. The target image feature is inputted to the RPN for region extraction, to obtain coordinates of a reference bounding box. For the first network head, the coordinates of a reference bounding box and the target image feature are inputted to a local region feature extractor connected to the first network head for pooling, an obtained pooling feature is inputted to the first network head for defect detection, and coordinates of the bounding box are outputted. For each of remaining network heads, coordinates of the bounding box outputted by a previous network head and the target image feature are inputted to a local region feature extractor connected to the network head for pooling, an obtained pooling feature is inputted to the network head for defect detection, and coordinates of the bounding box are outputted. Coordinates of the bounding box outputted by a last network head are determined as the information of a bounding box.

Operation 2018: Locate a defect region in the differential image, and determine a first detection result of the workpiece based on the defect region.

Operation 2019: Determine whether the first detection result indicates that the workpiece has a defect; and if yes, perform operation 2020; or if not, perform operation 2021.

Operation 2020: Determine that a second detection result of the workpiece is that the workpiece has a defect, and perform operation 2024.

Operation 2021: Obtain a pre-set confidence probability threshold and a pre-set area threshold that correspond to a defect category.

Operation 2022: Determine a defect area based on the coordinates of the bounding box, and determine a first comparison result between the defect area and the pre-set area threshold, and a second comparison result between a confidence probability and the pre-set confidence probability threshold.

Operation 2023: Determine a second detection result of the workpiece based on the first comparison result and the second comparison result.

Operation 2024: End the process.

The following describes in detail a defect detection method provided in another embodiment of this disclosure.

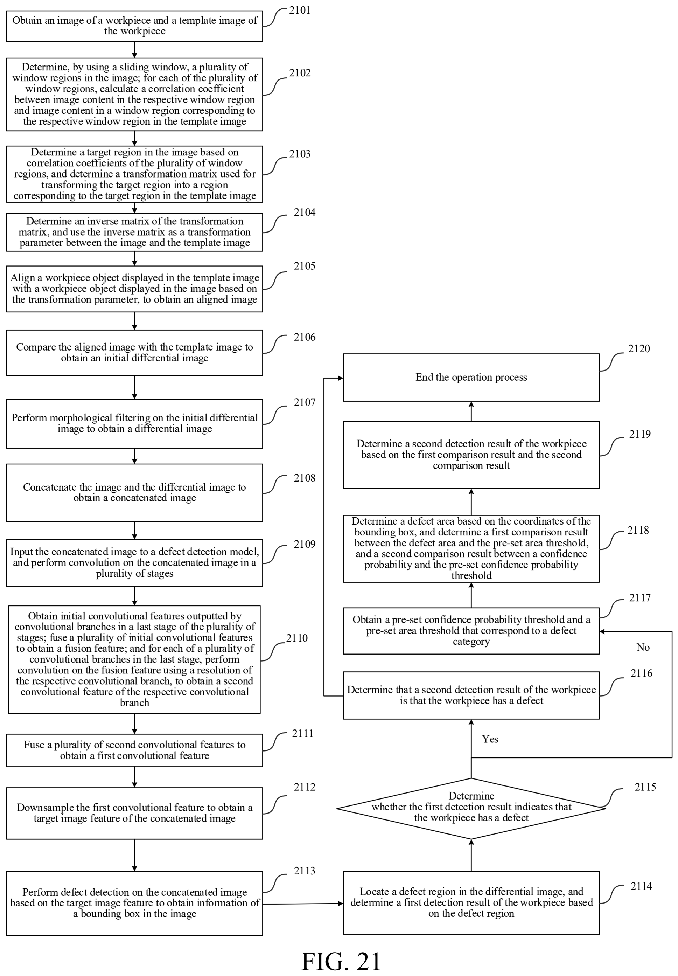

FIG. 21 is an exemplary schematic diagram of an overall process of a defect detection method according to an embodiment of this disclosure. The defect detection method includes but is not limited to the following operation 2101 to operation 2120.

Operation 2101: Obtain an image of a workpiece and a template image of the workpiece.

Operation 2102: Determine, by using a sliding window, a plurality of window regions in the image; for each of the plurality of window regions, calculate a correlation coefficient between image content in the respective window region and image content in a window region corresponding to the respective window region in the template image.

Operation 2103: Determine a target region in the image based on correlation coefficients of the plurality of window regions, and determine a transformation matrix used for transforming the target region into a region corresponding to the target region in the template image.

Operation 2104: Determine an inverse matrix of the transformation matrix, and use the inverse matrix as a transformation parameter between the image and the template image.

Operation 2105: Align a workpiece object displayed in the template image with a workpiece object displayed in the image based on the transformation parameter, to obtain an aligned image.

Operation 2106: Compare the aligned image with the template image to obtain an initial differential image.

Operation 2107: Perform morphological filtering on the initial differential image to obtain a differential image.

Operation 2108: Concatenate the image and the differential image to obtain a concatenated image.

Operation 2109: Input the concatenated image to a defect detection model, and perform convolution on the concatenated image in a plurality of stages.

In this operation, each stage includes at least one convolutional branch; a first stage of the plurality of stages includes one convolutional branch taking the image as input; for each of remaining stages after the first stage, a new convolutional branch is added upon entering a next stage from the respective stage; a resolution of the new convolutional branch is less than a resolution of any existing convolutional branch in the respective stage; and a feature inputted to each convolutional branch in the respective stage is obtained by fusing features outputted by all convolutional branches in a previous stage.

Operation 2110: Obtain initial convolutional features outputted by convolutional branches in a last stage of the plurality of stages; fuse a plurality of initial convolutional features to obtain a fusion feature; and for each of a plurality of convolutional branches in the last stage, perform convolution on the fusion feature using a resolution of the respective convolutional branch, to obtain a second convolutional feature of the respective convolutional branch.

In this operation, during last convolution, for any second convolutional branch, a feature outputted by the current convolutional branch is upsampled or downsampled based on a resolution comparison result between the current convolutional branch and a remaining second convolutional branch, and added to an input for last convolution of the remaining second convolutional branch. Then an initial convolutional feature outputted by last convolution of each second convolutional branch is obtained.

Operation 2111: Fuse a plurality of second convolutional features to obtain a first convolutional feature.

Operation 2112: Downsample the first convolutional feature to obtain a target image feature of the concatenated image.

Operation 2113: Perform defect detection on the concatenated image based on the target image feature to obtain information of a bounding box in the image.

In this operation, the defect detection model includes a plurality of concatenated network heads, a local region feature extractor connected to each network head, and an RPN. The target image feature is inputted to the RPN for region extraction, to obtain coordinates of a reference bounding box. For the first network head, the coordinates of a reference bounding box and the target image feature are inputted to a local region feature extractor connected to the first network head for pooling, an obtained pooling feature is inputted to the first network head for defect detection, and coordinates of the bounding box are outputted. For each of remaining network heads, coordinates of the bounding box outputted by a previous network head and the target image feature are inputted to a local region feature extractor connected to the network head for pooling, an obtained pooling feature is inputted to the network head for defect detection, and coordinates of the bounding box are outputted. Coordinates of the bounding box outputted by a last network head are determined as the information of a bounding box.

Operation 2114: Locate a defect region in the differential image, and determine a first detection result of the workpiece based on the defect region.

Operation 2115: Determine whether the first detection result indicates that the workpiece has a defect; and if yes, perform operation 2116; or if not, perform operation 2117.

Operation 2116: Determine that a second detection result of the workpiece is that the workpiece has a defect, and perform operation 2120.

Operation 2117: Obtain a pre-set confidence probability threshold and a pre-set area threshold that correspond to a defect category.

Operation 2118: Determine a defect area based on the coordinates of the bounding box, and determine a first comparison result between the defect area and the pre-set area threshold, and a second comparison result between a confidence probability and the pre-set confidence probability threshold.

Operation 2119: Determine a second detection result of the workpiece based on the first comparison result and the second comparison result.

Operation 2120: End the process.

Although the operations are shown sequentially according to the instructions of the arrows in the foregoing flowcharts, the operations are not necessarily performed sequentially according to the sequence instructed by the arrows. Unless otherwise explicitly specified in the embodiments, execution of the operations is not strictly limited, and the operations may be performed in other orders. In addition, at least some operations in the foregoing flowcharts may include a plurality of operations or a plurality of stages, and these operations or stages are not necessarily performed at same time, but may be performed at different time. The operations or stages are not necessarily performed sequentially, but may be performed by turn or alternately with other operations or at least a part of operations or stages in other operations.

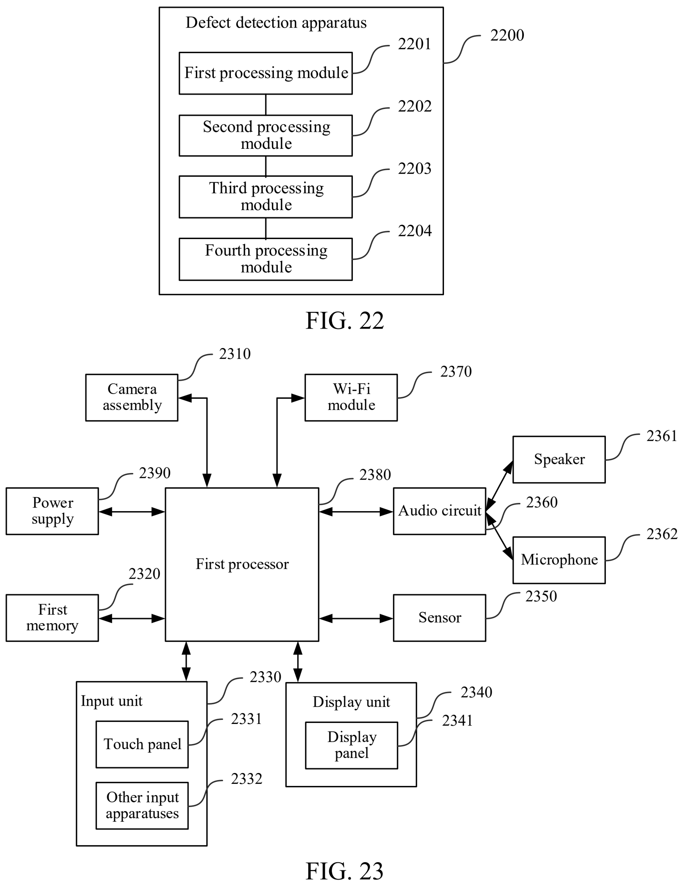

FIG. 22 is an exemplary schematic structural diagram of a defect detection apparatus 2200 according to an embodiment of this disclosure. The defect detection apparatus 2200 includes:

a first processing module 2201, configured to obtain an image of a workpiece and a template image of the workpiece, and compare the image with the template image to obtain a differential image;

a second processing module 2202, configured to input the image and the differential image to a defect detection model, to perform the following processing: extracting a target image feature from the image and the differential image; and perform defect detection on the image based on the target image feature to obtain information of a bounding box for annotating a first defect region in the image;

a third processing module 2203, configured to locate a second defect region in the differential image, and determine a first detection result of the workpiece based on whether the second defect region meets a pre-defined defect feature condition; and

a fourth processing module 2204, configured to determine a second detection result of the workpiece based on the information of a bounding box and the first detection result.

Further, the second processing module 2202 is configured to: extract a first image feature from the image; extract a second image feature from the differential image; and fuse the first image feature and the second image feature to obtain the target image feature.

In a possible implementation, the image is a multi-channel image, the differential image is a single-channel image, the second processing module 2202 is configured to: obtain an expanded differential image by replicating data of the differential image, a quantity of channels of the expanded differential image being equal to a quantity of channels of the image; and input the image and the expanded differential image to the defect detection model.

In a possible implementation, the second processing module 2202 is configured to:

sequentially perform convolution on the image in a plurality of stages, wherein

each stage comprises at least one convolutional branch;

a first stage of the plurality of stages comprises one convolutional branch taking the image as input;

for each of remaining stages after the first stage,

a new convolutional branch is added upon entering a next stage from the respective stage;
a resolution of the new convolutional branch is less than a resolution of any existing convolutional branch in the respective stage; and
a feature inputted to each convolutional branch in the respective stage is obtained by fusing features outputted by all convolutional branches in a previous stage;

fuse initial convolutional features outputted by convolutional branches in a last stage of the plurality of stages, to obtain a first convolutional feature; and

downsample the first convolutional feature to obtain the first image feature.

In a possible implementation, the second processing module 2202 is configured to:

fuse the initial convolutional features to obtain a fusion feature;

for each of the convolutional branches in the last stage, perform convolution on the fusion feature using a resolution of the respective convolutional branch, to obtain a second convolutional feature of the respective convolutional branch; and

fuse second convolutional features of the convolutional branches in the last stage to obtain the first convolutional feature.

In a possible implementation, the second processing module 2202 is configured to:

obtain a third image feature, by concatenating a feature value of each pixel in the first image feature with a feature value of a corresponding pixel in the second image feature;

reduce a dimension of the third image feature to obtain a fourth image feature; and

activate the fourth image feature to obtain the target image feature.

In a possible implementation, the defect detection model includes a plurality of concatenated network heads, a local region feature extractor connected to each of the plurality of concatenated network heads, and an RPN, and the second processing module 2202 is configured to: input the target image feature to the RPN for region extraction, to obtain coordinates of a reference bounding box; for a first network head of the plurality of concatenated network heads, input the coordinates of the reference bounding box and the target image feature to a local region feature extractor connected to the first network head to obtain a pooling feature, input the pooling feature to the first network head for defect detection, and output coordinates of a detection bounding box; for each of remaining network heads following the first network head, input the coordinates of the detection bounding box outputted by a previous network head and the target image feature to a local region feature extractor connected to the respective network head to obtain a pooling feature, input the pooling feature to the respective network head for defect detection, and output coordinates of a detection bounding box; and determine coordinates of a detection bounding box outputted by a last network head as the information of the bounding box.

In a possible implementation, the information of a bounding box includes coordinates of the bounding box, a confidence probability associated with the bounding box, and a defect category associated with the bounding box, and the fourth processing module 2204 is configured to:

when the first detection result indicates that the workpiece has no defect, obtain a pre-set confidence probability threshold and a pre-set area threshold that correspond to the defect category;

determine a defect area based on the coordinates, and determine a first comparison result between the defect area and the pre-set area threshold, and a second comparison result between the confidence probability and the pre-set confidence probability threshold; and

determine the second detection result based on the first comparison result and the second comparison result.

In a possible implementation, the fourth processing module 2204 is further configured to:
when the first detection result indicates that the workpiece has a defect, determine that the second detection result is that the workpiece has a defect.

In a possible implementation, the first processing module 220 is configured to:

determine a transformation parameter between the image and the template image;

align a workpiece object displayed in the template image with a workpiece object displayed in the image based on the transformation parameter, to obtain an aligned image;

compare the aligned image with the template image to obtain an initial differential image; and

filter the initial differential image to obtain the differential image.

In a possible implementation, the first processing module 2201 is configured to:

determine, by using a sliding window, a plurality of window regions in the image;

for each of the plurality of window regions, calculate a correlation coefficient between image content in the respective window region and image content in a window region corresponding to the respective window region in the template image;

determine a target region in the image based on correlation coefficients of the plurality of window regions;

determine a transformation matrix used for transforming the target region into a region corresponding to the target region in the template image; and

determine an inverse matrix of the transformation matrix as the transformation parameter.

Further, the second processing module 2202 is configured to:

concatenate the image and the differential image to obtain a concatenated image; and

input the concatenated image to the defect detection model to extract the target image feature.

In a possible implementation, the defect detection apparatus further includes a first training module, and the first training module is configured to:

obtain a training image of the workpiece, the training image being labeled with a corresponding defect category label;

compare the training image with the template image to obtain a sample differential image;

input the training image and the sample differential image to the defect detection model to obtain information of a sample bounding box in the training image, the information of the sample bounding box comprising a sample defect category of the workpiece;

determine an initial classification loss based on the sample defect category and the defect category label;

adjust the initial classification loss based on a pre-set first adjustment parameter and a pre-set second adjustment parameter to obtain a target classification loss, the pre-set first adjustment parameter being related to a quantity of positive samples and a quantity of negative samples corresponding to the defect category label, and the pre-set second adjustment parameter being related to a classification difficulty level corresponding to the defect category label; and

train the defect detection model based on the target classification loss.

The defect detection apparatus 2200 and the defect detection method are based on a same inventive concept. An image of a workpiece is compared with a template image to obtain a differential image, where the differential image can provide visual difference information of the workpiece. Then the image and the differential image are inputted to a defect detection model, to introduce difference information into the model, and help improve accuracy of feature extraction performed by the model. Then a target image feature is extracted, and defect detection is performed on the image based on the target image feature to obtain information of a bounding box in the image. A feature related to a defect region in the image is highlighted by using a feature, in the target image feature, that corresponds to the differential image. This helps improve a capability of detecting, by the model, a defect category that has not been learned due to lack of a training sample, to improve accuracy of the information of a bounding box. A first detection result of the workpiece is determined based on the defect region located by using the differential image, and a second detection result of the workpiece is determined based on both the first detection result and the information of a bounding box. To be specific, a feature obtained through a plurality of times of comparison is used based on defect detection performed by using a deep learning algorithm. High visibility of the feature obtained through comparison can visually assist in defect detection, to effectively improve accuracy of defect detection and reduce dependency on a training sample.

An electronic device provided in embodiments of this disclosure to perform the foregoing defect detection method may be a terminal. FIG. 23 is a block diagram of a partial structure of a terminal according to an embodiment of this disclosure. The terminal includes the following components: a camera assembly 2310, a memory 2320, an input unit 2330, a display unit 2340, a sensor 2350, an audio circuit 2360, a wireless fidelity (Wi-Fi) module 2370, a processor 2380, a power supply 2390, and the like. A person skilled in the art may understand that the structure of the terminal shown in FIG. 23 does not constitute a limitation on the terminal. The terminal may include more or fewer components than those shown in the figure, or some components may be combined, or different component layouts may be used.

In this embodiment, the processor 2380 included in the terminal may perform the defect detection method in the foregoing embodiments.

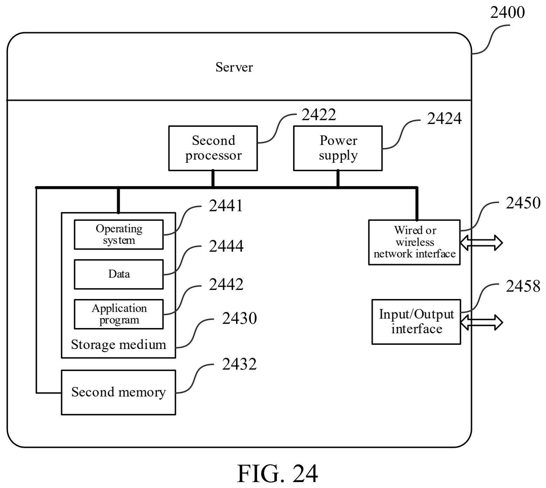

An electronic device provided in embodiments of this disclosure to perform the foregoing defect detection method may alternatively be a server. FIG. 24 is a block diagram of a partial structure of a server according to embodiment of this disclosure. The server 2400 may vary greatly due to different configurations or performance, and may include one or more central processing units (CPUs) 2422 (for example, one or more processors), a memory 2432, and one or more storage media 2430 (for example, one or more mass storage apparatuses) that store an application program 2442 or data 2444. The memory 2432 and the storage medium 2430 may perform transient storage or persistent storage. A program stored in the storage medium 2430 may include one or more modules (not shown in the figure), and each module may include a series of instruction operations on the server 2400. Further, the CPU 2422 may be configured to communicate with the storage medium 2430, and perform, on the server 2400, a series of instruction operations in the storage medium 2430.

The server 2400 may further include one or more power supplies 2424, one or more wired or wireless network interfaces 2450, one or more input/output interfaces 2458, and/or one or more operating systems 2441, for example, Windows Server™, Mac OS X™, Unix™, Linux™, or FreeBSD™.

The processor in the server 2400 may be configured to perform the defect detection method.

An embodiment of this disclosure further provides a computer-readable storage medium. The computer-readable storage medium is configured to store program code. The program code is configured to perform the defect detection method in the foregoing embodiments.

An embodiment of this disclosure further provides a computer program product. The computer program product includes a computer program. The computer program is stored in a computer-readable storage medium. A processor of a computer device reads the computer program from the computer-readable storage medium, and the processor executes the computer program, to enable the computer device to perform the foregoing defect detection method.

In the specification and accompanying drawings of this disclosure, the terms "first", "second", "third", "fourth", and so on (if existent) are intended to distinguish between similar objects but do not necessarily indicate a specific order or sequence. Data used in this way is exchangeable in a proper case, to describe the embodiments of this disclosure. For example, the embodiments can be implemented in an order different from the order shown or described herein. In addition, the terms "include", "have", and any variants thereof are intended to cover a non-exclusive inclusion. For example, a process, method, system, product, or apparatus that includes a list of operations or units is not necessarily limited to those expressly listed operations or units, but may include other operations or units that are not expressly listed or are inherent to the process, method, product, or apparatus.

In this disclosure, "at least one" means one or more, and "a plurality of" means two or more. The term "and/or" is configured for describing an association between associated objects and representing that three associations may exist. For example, "A and/or B" may indicate that only A exists, only B exists, and both A and B exist, where A and B may be singular or plural. The character "/" usually indicates an "or" relationship between associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

In the description of the embodiments of this disclosure, "a plurality of (or multiple)" means two or more; "greater than", "less than", "exceed", and the like are understood as excluding a number itself; and "above", "below", "within", and the like are understood as including a number itself.

In the several embodiments provided in this disclosure, the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and components shown as units may or may not be physical units, that is, may be located in one position, or may be distributed on a plurality of network units. Some or all of the units may be selected according to actual requirements to achieve the objectives of the solutions of the embodiments.

In addition, functional units in the embodiments of this disclosure may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this disclosure essentially, or the part contributing to the related technology, or all or some of the technical solutions may be implemented in a form of a software product. The computer software product is stored in a storage medium and includes several instructions for indicating a computer apparatus (which may be a personal computer, a server, or a network apparatus) to perform all or some of the operations of the methods described in the embodiments of this disclosure. The foregoing storage medium includes: any medium that can store program code, such as a USB flash disk, a removable hard disk, a read-only memory (ROM), a random access memory (RAM), a magnetic disk, or an optical disc.

The implementations provided in the embodiments of this disclosure may be combined in any manners to achieve different technical effects.

The foregoing are specific descriptions of exemplary implementations of this disclosure, but this disclosure is not limited to the foregoing implementations. A person skilled in the art may make various equivalent variations or replacements without departing from the spirit of this disclosure.

## Claims

1. A defect detection method, executable by an electronic device, and comprising:

   obtaining an image of a workpiece and a template image of the workpiece, and comparing the image with the template image to obtain a differential image;
   inputting the image and the differential image to a pre-trained defect detection model, to perform the following processing:

   extracting a target image feature from the image and the differential image; and
   performing defect detection on the image based on the target image feature to obtain information of a bounding box for annotating a first defect region in the image;

   locating a second defect region in the differential image, and determining a first detection result of the workpiece based on whether the second defect region meets a pre-defined defect feature condition; and
   determining a second detection result of the workpiece based on the information of the bounding box and the first detection result.

2. The defect detection method according to claim 1, wherein the extracting a target image feature from the image and the differential image comprises:

   extracting a first image feature from the image;
   extracting a second image feature from the differential image; and
   fusing the first image feature and the second image feature to obtain the target image feature.

3. The defect detection method according to claim 2, wherein the image is a multi-channel image, the differential image is a single-channel image, the inputting the image and the differential image to a pre-trained defect detection model comprises:

obtaining an expanded differential image by replicating data of the differential image, a quantity of channels of the expanded differential image being equal to a quantity of channels of the image; and
inputting the image and the expanded differential image to the defect detection model.

4. The defect detection method according to claim 2, wherein the extracting a first image feature from the image comprises:

sequentially performing convolution on the image in a plurality of stages, wherein

each stage comprises at least one convolutional branch;
a first stage of the plurality of stages comprises one convolutional branch taking the image as input;
for each of remaining stages after the first stage,

a new convolutional branch is added upon entering a next stage from the respective stage;
a resolution of the new convolutional branch is less than a resolution of any existing convolutional branch in the respective stage; and
a feature inputted to each convolutional branch in the respective stage is obtained by fusing features outputted by all convolutional branches in a previous stage;

fusing initial convolutional features outputted by convolutional branches in a last stage of the plurality of stages, to obtain a first convolutional feature; and
downsampling the first convolutional feature to obtain the first image feature.

5. The defect detection method according to claim 4, wherein the fusing initial convolutional features outputted by convolutional branches in a last stage of the plurality of stages, to obtain a first convolutional feature comprises:

fusing the initial convolutional features to obtain a fusion feature;
for each of the convolutional branches in the last stage, performing convolution on the fusion feature using a resolution of the respective convolutional branch, to obtain a second convolutional feature of the respective convolutional branch; and
fusing second convolutional features of the convolutional branches in the last stage to obtain the first convolutional feature.

6. The defect detection method according to claim 2, wherein the fusing the first image feature and the second image feature to obtain the target image feature comprises:

obtaining a third image feature, by concatenating a feature value of each pixel in the first image feature with a feature value of a corresponding pixel in the second image feature;
reducing a dimension of the third image feature to obtain a fourth image feature; and
activating the fourth image feature to obtain the target image feature.

7. The defect detection method according to any one of claims 1 to 6, wherein the defect detection model comprises a plurality of concatenated network heads, a local region feature extractor connected to each of the plurality of concatenated network heads, and a region proposal network, RPN, and the performing defect detection on the image based on the target image feature to obtain information of a bounding box for annotating a first defect region in the image comprises:

inputting the target image feature to the RPN for region extraction, to obtain coordinates of a reference bounding box;
for a first network head of the plurality of concatenated network heads,
inputting the coordinates of the reference bounding box and the target image feature to a local region feature extractor connected to the first network head to obtain a pooling feature, inputting the pooling feature to the first network head for defect detection, and outputting coordinates of a detection bounding box;
for each of remaining network heads following the first network head,

inputting the coordinates of the detection bounding box outputted by a previous network head and the target image feature to a local region feature extractor connected to the respective network head to obtain a pooling feature, inputting the pooling feature to the respective network head for defect detection, and outputting coordinates of a detection bounding box; and

determining coordinates of a detection bounding box outputted by a last network head as the information of the bounding box.

8. The defect detection method according to any one of claims 1 to 7, wherein the information of the bounding box comprises coordinates of the bounding box, a confidence probability associated with the bounding box, and a defect category associated with the bounding box, and the determining a second detection result of the workpiece based on the information of the bounding box and the first detection result comprises:

when the first detection result indicates that the workpiece has no defect, obtaining a pre-set confidence probability threshold and a pre-set area threshold that correspond to the defect category;

determining a defect area based on the coordinates, and determining a first comparison result between the defect area and the pre-set area threshold, and a second comparison result between the confidence probability and the pre-set confidence probability threshold; and

determining the second detection result based on the first comparison result and the second comparison result.

9. The defect detection method according to claim 8, further comprising:
when the first detection result indicates that the workpiece has a defect, determining that the second detection result is that the workpiece has a defect.

10. The defect detection method according to any one of claims 1 to 9, wherein the comparing the image with the template image to obtain a differential image comprises:

determining a transformation parameter between the image and the template image;

aligning a workpiece object displayed in the template image with a workpiece object displayed in the image based on the transformation parameter, to obtain an aligned image;

comparing the aligned image with the template image to obtain an initial differential image; and

filtering the initial differential image to obtain the differential image.

11. The defect detection method according to claim 10, wherein the determining a transformation parameter between the image and the template image comprises:

determining, by using a sliding window, a plurality of window regions in the image;

for each of the plurality of window regions, calculating a correlation coefficient between image content in the respective window region and image content in a window region corresponding to the respective window region in the template image;

determining a target region in the image based on correlation coefficients of the plurality of window regions;

determining a transformation matrix used for transforming the target region into a region corresponding to the target region in the template image; and

determining an inverse matrix of the transformation matrix as the transformation parameter.

12. The defect detection method according to claim 1, wherein the extracting a target image feature from the image and the differential image comprises:

concatenating the image and the differential image to obtain a concatenated image; and

inputting the concatenated image to the defect detection model to extract the target image feature.

13. The defect detection method according to any one of claims 1 to 12, wherein the defect detection model is trained through the following operations:

obtaining a training image of the workpiece, the training image being labeled with a defect category label;

comparing the training image with the template image to obtain a sample differential image;

inputting the training image and the sample differential image to the defect detection model to obtain information of a sample bounding box in the training image, the information of the sample bounding box comprising a sample defect category of the workpiece;

determining an initial classification loss based on the sample defect category and the defect category label;

adjusting the initial classification loss based on a pre-set first adjustment parameter and a pre-set second adjustment parameter to obtain a target classification loss, the pre-set first adjustment parameter being related to a quantity of positive samples and a quantity of negative samples corresponding to the defect category label, and the pre-set second adjustment parameter being related to a classification difficulty level corresponding to the defect category label; and

training the defect detection model based on the target classification loss.

14. A defect detection apparatus, comprising:

a first processing module, configured to obtain an image of a workpiece and a template image of the workpiece, and compare the image with the template image to obtain a differential image;

a second processing module, configured to input the image and the differential image to a defect detection model, to perform the following processing: extracting a target image feature from the image and the differential image; and perform defect detection on the image based on the target image feature to obtain information of a bounding box for annotating a first defect region in the image;

a third processing module, configured to locate a second defect region in the differential image, and determine a first detection result of the workpiece based on whether the second defect region meets a pre-defined defect feature condition; and

a fourth processing module, configured to determine a second detection result of the workpiece based on the information of a bounding box and the first detection result.

15. The defect detection apparatus according to claim 14, wherein the second processing module is configured to: extract a first image feature from the image; extract a second image feature from the differential image; and fuse the first image feature and the second image feature to obtain the target image feature.

16. The defect detection apparatus according to claim 14 or 15, wherein the defect detection model comprises a plurality of concatenated network heads, a local region feature extractor connected to each of the plurality of concatenated network heads, and a region proposal network, RPN; and the second processing module is configured to: input the target image feature to the RPN for region extraction, to obtain coordinates of a reference bounding box; for a first network head of the plurality of concatenated network heads, input the coordinates of the reference bounding box and the target image feature to a local region feature extractor connected to the first network head to obtain a pooling feature, input the pooling feature to the first network head for defect detection, and output coordinates of a detection bounding box; for each of remaining network heads following the first network head, input the coordinates of the detection bounding box outputted by a previous network head and the target image feature to a local region feature extractor connected to the respective network head to obtain a pooling feature, input the pooling feature to the respective network head for defect detection, and output coordinates of a detection bounding box; and determine coordinates of a detection bounding box outputted by a last network head as the information of the bounding box.

17. The defect detection apparatus according to any one of claims 14 to 16, wherein the information of a bounding box comprises coordinates of the bounding box, a confidence probability associated with the bounding box, and a defect category associated with the bounding box; and the fourth processing module is configured to: when the first detection result indicates that the workpiece has no defect, obtain a pre-set confidence probability threshold and a pre-set area threshold that correspond to the defect category; determine a defect area based on the coordinates, and determine a first comparison result between the defect area and the pre-set area threshold, and a second comparison result between the confidence probability and the pre-set confidence probability threshold; and determine the second detection result based on the first comparison result and the second comparison result.

18. An electronic device, comprising a memory and a processor, the memory having a computer program stored therein, and the processor, when executing the computer program, implementing the defect detection method according to any one of claims 1 to 13.

19. A computer-readable storage medium, the storage medium having a computer program stored therein, and the computer program, when executed by a processor, implementing the defect detection method according to any one of claims 1 to 13.

20. A computer program product, comprising a computer program, the computer program, when executed by a processor, implementing the defect detection method according to any one of claims 1 to 13.

FIG. 1

FIG. 2

Image

Template image

Compare

Differential image

**FIG. 3**

Image A

Differential image B

Input

Input

Feature extraction module

Feature extraction module

Image feature A

Fuse

Differential image feature B

Fusion image feature C

Defect detection

**FIG. 4**

Image 1   3×3 single-channel grayscale image

$$\begin{array}{c}\text{H}\\ \begin{bmatrix} 220,\ 210,\ 205 \\ 200,\ 230,\ 220 \\ 210,\ 205,\ 225 \end{bmatrix}\end{array}$$

⇩ Channel replication

Image 3   3×3 three-channel grayscale image

$$\begin{array}{ccc}\text{H} & \text{H1} & \text{H2}\end{array}$$
$$\begin{bmatrix} 220,\ 210,\ 205, & 220,\ 210,\ 205, & 220,\ 210,\ 205 \\ 200,\ 230,\ 220, & 200,\ 230,\ 220, & 200,\ 230,\ 220 \\ 210,\ 205,\ 225, & 210,\ 205,\ 225, & 210,\ 205,\ 225 \end{bmatrix}$$

⇧⇩ Three-channel correspondence

$$\begin{array}{ccc}\text{R} & \text{G} & \text{B}\end{array}$$
$$\begin{bmatrix} 120,\ 210,\ 205, & 200,\ 230,\ 120, & 210,\ 105,\ 225 \\ 210,\ 205,\ 100, & 100,\ 220,\ 210, & 220,\ 110,\ 205 \\ 200,\ 120,\ 215, & 210,\ 105,\ 220, & 120,\ 210,\ 110 \end{bmatrix}$$

Image 2   3×3 three-channel RGB color image

FIG. 5

FIG. 6

FIG. 7

FIG. 8

Feature fusion

FIG. 9

M$^{th}$ stage  Initial convolutional feature  Second convolutional feature

Convolutional branch X

## FIG. 10

Image

Three-channel

Differential image

Single-channel

Form a three-channel image through replication

Feature extraction module

Share

Feature extraction module

First image feature

Same dimensionality

Second image feature

256-dimensional

Feature concatenation

256-dimensional

Third image feature

512-dimensional

Dimensionality reduction through convolution

Fourth image feature

256-dimensional

Active

Fusion image feature

Three-channel

## FIG. 11

FIG. 12

Schematic diagram of a bounding
box of an image

P3 = 0.5   S3 = 2 cm$^2$

↕ Compare

Pre-set dent confidence
probability threshold = 0.7
Pre-set dent area = 10 cm$^2$

K3

K2

P2 = 0.3   S2 = 3.5 cm$^2$

↕ Compare

Pre-set scratch confidence
probability threshold = 0.4
Preset scratch area = 3 cm$^2$

K1

P1 = 0.8   S1 = 20 cm$^2$

↕ Compare

Pre-set stain confidence
probability threshold = 0.7   Pre-
set stain area threshold = 15 cm$^2$

Check the bounding box

K3

Quality inspection
succeeds

K2

Quality inspection
succeeds

K1

Quality
inspection fails

## FIG. 13

(a)

(b)

(c)

(d)

## FIG. 14

**FIG. 15**

**FIG. 16**

Obtain a training image of a target workpiece, and compare the training image with a template image to obtain a sample differential image, the training image being labeled with a corresponding defect category label — 1701

Input the training image and the sample differential image to the defect detection model to obtain information of a sample bounding box in the training image, the information of the sample bounding box including a sample defect category of the workpiece — 1702

Determine an initial classification loss based on the sample defect category and the defect category label — 1703

Adjust the initial classification loss based on a pre-set first adjustment parameter and a pre-set second adjustment parameter to obtain a target classification loss, the pre-set first adjustment parameter being related to a quantity of positive samples and a quantity of negative samples corresponding to the defect category label, and the pre-set second adjustment parameter being related to a classification difficulty level corresponding to the defect category label — 1704

Train the defect detection model based on the target classification loss — 1705

FIG. 17

1801

Template image

1802

Generate a transformation matrix

1801

Image

1803

Align the template image with the image

1804

Generate a differential image

1805

Morphological image processing

1807

Concatenate

1808

Output information of a bounding box

1806

Locate a defect region and determine a first detection result

1809

Perform concatenation post-processing to determine a second detection result

## FIG. 18

Three-channel image

Image

Concatenate

Single-channel image

Differential image

Four-channel image

Concatenated image

Image | Differential image

Defect detection model

Input

Extract

Fifth image feature

Defect detection

Information of a bounding box

## FIG. 19

Obtain an image of a workpiece and a template image of the workpiece ⟋ 2001

Determine, by using a sliding window, a plurality of window regions in the image; for each of the plurality of window regions, calculate a correlation coefficient between image content in the respective window region and image content in a window region corresponding to the respective window region in the template image ⟋ 2002

Determine a target region in the image based on correlation coefficients of the plurality of window regions, and determine a transformation matrix used for transforming the target region into a region corresponding to the target region in the template image ⟋ 2003

etermine an inverse matrix of the transformation matrix, and use the inverse matrix as a transformation parameter between the image and the template image ⟋ 2004

Align a workpiece object displayed in the template image with a workpiece object displayed in the image based on the transformation parameter, to obtain an aligned image ⟋ 2005

Compare the aligned image with the template image to obtain an initial differential image ⟋ 2006

Perform morphological filtering on the initial differential image to obtain a differential image ⟋ 2007

Obtain an expanded differential image by replicating data of the differential image, a quantity of channels of the expanded differential image being equal to a quantity of channels of the image ⟋ 2008

Input the image and the expanded differential image to a defect detection model ⟋ 2009

Sequentially perform convolution on the image in a plurality of stages ⟋ 2010

Obtain initial convolutional features outputted by convolutional branches in a last stage of the plurality of stages; fuse a plurality of initial convolutional features to obtain a fusion feature; and for each of a plurality of convolutional branches in the last stage, perform convolution on the fusion feature using a resolution of the respective convolutional branch, to obtain a second convolutional feature of the respective convolutional branch ⟋ 2011

Fuse a plurality of second convolutional features to obtain a first convolutional feature ⟋ 2012

Downsample the first convolutional feature to obtain a first image feature of the image ⟋ 2013

End the operation process ⟋ 2024

Determine a second detection result of the workpiece based on the first comparison result and the second comparison result ⟋ 2023

Determine a defect area based on the coordinates of the bounding box, and determine a first comparison result between the defect area and the pre-set area threshold, and a second comparison result between a confidence probability and the pre-set confidence probability threshold ⟋ 2022

Obtain a pre-set confidence probability threshold and a pre-set area threshold that correspond to a defect category ⟋ 2021

Determine that a second detection result of the workpiece is that the workpiece has a defect ⟋ 2020

No

Yes

Determine whether the first detection result indicates that the workpiece has a defect ⟋ 2019

Locate a defect region in the differential image, and determine a first detection result of the workpiece based on the defect region ⟋ 2018

Perform defect detection on the image based on the target image feature to obtain information of a bounding box in the image ⟋ 2017

Activate the fourth image feature to obtain a target image feature ⟋ 2016

Reduce a dimension of the third image feature obtain a fourth image feature ⟋ 2015

Concatenate a feature value of each pixel in the first image feature with a feature value of a corresponding pixel in a second image feature to obtain a third image feature ⟋ 2014

FIG. 20

Obtain an image of a workpiece and a template image of the workpiece — 2101

Determine, by using a sliding window, a plurality of window regions in the image; for each of the plurality of window regions, calculate a correlation coefficient between image content in the respective window region and image content in a window region corresponding to the respective window region in the template image — 2102

Determine a target region in the image based on correlation coefficients of the plurality of window regions, and determine a transformation matrix used for transforming the target region into a region corresponding to the target region in the template image — 2103

Determine an inverse matrix of the transformation matrix, and use the inverse matrix as a transformation parameter between the image and the template image — 2104

Align a workpiece object displayed in the template image with a workpiece object displayed in the image based on the transformation parameter, to obtain an aligned image — 2105

Compare the aligned image with the template image to obtain an initial differential image — 2106

Perform morphological filtering on the initial differential image to obtain a differential image — 2107

Concatenate the image and the differential image to obtain a concatenated image — 2108

Input the concatenated image to a defect detection model, and perform convolution on the concatenated image in a plurality of stages — 2109

Obtain initial convolutional features outputted by convolutional branches in a last stage of the plurality of stages; fuse a plurality of initial convolutional features to obtain a fusion feature; and for each of a plurality of convolutional branches in the last stage, perform convolution on the fusion feature using a resolution of the respective convolutional branch, to obtain a second convolutional feature of the respective convolutional branch — 2110

Fuse a plurality of second convolutional features to obtain a first convolutional feature — 2111

Downsample the first convolutional feature to obtain a target image feature of the concatenated image — 2112

Perform defect detection on the concatenated image based on the target image feature to obtain information of a bounding box in the image — 2113

Locate a defect region in the differential image, and determine a first detection result of the workpiece based on the defect region — 2114

Determine whether the first detection result indicates that the workpiece has a defect — 2115

Yes

Determine that a second detection result of the workpiece is that the workpiece has a defect — 2116

No

Obtain a pre-set confidence probability threshold and a pre-set area threshold that correspond to a defect category — 2117

Determine a defect area based on the coordinates of the bounding box, and determine a first comparison result between the defect area and the pre-set area threshold, and a second comparison result between a confidence probability and the pre-set confidence probability threshold — 2118

Determine a second detection result of the workpiece based on the first comparison result and the second comparison result — 2119

End the operation process — 2120

FIG. 21

Defect detection apparatus

First processing module — 2201

— 2200

Second processing module — 2202

Third processing module — 2203

Fourth processing module — 2204

FIG. 22

Camera assembly — 2310

Wi-Fi module — 2370

Speaker — 2361

Power supply — 2390

Audio circuit — 2380

2360

First processor

Microphone — 2362

First memory — 2320

Sensor — 2350

Input unit — 2330

Display unit — 2340

Touch panel — 2331

Display panel — 2341

Other input apparatuses — 2332

FIG. 23

2400

Server

2422

Second
processor

2424

Power
supply

2441

Operating
system

2444

Data

2442

Application
program

2430

Storage medium

2432

Second memory

2450

Wired or
wireless
network interface

2458

Input/Output
interface

FIG. 24

## INTERNATIONAL SEARCH REPORT

| International application No. |
|---|
| **PCT/CN2024/118110** |

| A. | CLASSIFICATION OF SUBJECT MATTER |
|---|---|

G06T 7/00(2017.01)i

According to International Patent Classification (IPC) or to both national classification and IPC

| B. | FIELDS SEARCHED |
|---|---|

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 差分, 待测, 缺陷, 检测, 模型, 网络, 图像, 待检测, 模板, 标准, 参考, 对比, 检测框, 区域, 差异, 差值, 德尔塔, delta, defect, detection, image, model, network, template, reference, standard, difference, compare, frame, area

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117830210 A (TENCENT TECHNOLOGY (SHENZHEN) CO., LTD.) 05 April 2024 (2024-04-05)<br>description, paragraphs [0102]-[0306] | 1-20 |
| A | CN 115690101 A (MOORE THREAD INTELLIGENT TECHNOLOGY (BEIJING) CO., LTD. et al.) 03 February 2023 (2023-02-03)<br>description, paragraphs [0026]-[0274] | 1-20 |
| A | CN 116188432 A (HANGZHOU CHANGCHUAN TECHNOLOGY CO., LTD.) 30 May 2023 (2023-05-30)<br>entire document | 1-20 |
| A | CN 111028213 A (PEKING UNIVERSITY FOUNDER GROUP CORP. et al.) 17 April 2020 (2020-04-17)<br>entire document | 1-20 |
| A | CN 113111828 A (NINGBO INSTITUTE OF MATERIAL TECHNOLOGY AND ENGINEERING, CHINESE ACADEMY OF SCIENCES) 13 July 2021 (2021-07-13)<br>entire document | 1-20 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **30 October 2024** | **05 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/118110**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022170706 A1 (GUANGDONG TOPSTAR TECHNOLOGY CO., LTD.) 18 August 2022 (2022-08-18)<br>entire document | 1-20 |

Form PCT/ISA/210 (second sheet) (July 2022)

**INTERNATIONAL SEARCH REPORT**
Information on patent family members

International application No.

**PCT/CN2024/118110**

| Patent document cited in search report | | | Publication date (day/month/year) | Patent family member(s) | | | Publication date (day/month/year) |
|---|---|---|---|---|---|---|---|
| CN | 117830210 | A | 05 April 2024 | None | | | |
| CN | 115690101 | A | 03 February 2023 | None | | | |
| CN | 116188432 | A | 30 May 2023 | WO | 2024169750 | A1 | 22 August 2024 |
| CN | 111028213 | A | 17 April 2020 | None | | | |
| CN | 113111828 | A | 13 July 2021 | None | | | |
| WO | 2022170706 | A1 | 18 August 2022 | CN | 112837303 | A | 25 May 2021 |

Form PCT/ISA/210 (patent family annex) (July 2022)

**REFERENCES CITED IN THE DESCRIPTION**

**Patent documents cited in the description**

- CN 202311498351